# EUROPEAN PATENT SPECIFICATION

(11) **EP 3 000 700 B1**
(45) Date of publication and mention of the grant of the patent: **01.02.2017**
(21) Application number: 15181772.3
(22) Date of filing: 20.08.2015
(51) Int. Cl.: B62J 6/02, B60Q 1/12, B60Q 1/14

(54) **HEAD LAMP SYSTEM AND STRADDLED VEHICLE**
SCHEINWERFERSYSTEM UND GRÄTSCHSITZFAHRZEUG
SYSTÈME DE PROJECTEURS ET VÉHICULE À SELLE

(30) Priority: 24.09.2014 JP 2014194254
(43) Date of publication of application: 30.03.2016
(73) Proprietor: Yamaha Hatsudoki Kabushiki Kaisha, Iwata-shi, Shizuoka 438-8501 (JP)
(72) Inventor: KOSUGI, Makoto, Iwata-shi, Shizuoka 438-8501 (JP); IKEDA, Takeshi, Iwata-shi, Shizuoka 438-8501 (JP); INOUE, Takehiro, Iwata-shi, Shizuoka 438-8501 (JP); OOBA, Junichi, Iwata-shi, Shizuoka 438-8501 (JP)
(74) Representative: Zinkler, Franz

(56) References cited:
- EP-A1- 1 748 251
- EP-A1- 2 676 872
- EP-A2- 2 641 780
- JP-A- 2008 222 178
- JP-B1- 5 525 638

## Description

### BACKGROUND OF THE INVENTION

### Field of the Invention

The present invention relates to a head lamp system and a straddled vehicle.

### Description of Related Art

In a straddled vehicle such as a motorcycle, a head lamp system having a plurality of head lamps is provided in order to improve visibility of an area in front of the vehicle.

In JP 2008-222178 A, a headlight for the motorcycle constituted by a plurality of lighting tool units are described. In a low beam mode, a plurality of low beam lighting tool units light up. In a high beam mode, a plurality of high beam lighting tool units light up. Further, in the low beam mode, when a vehicle body of the motorcycle tilts (banks) in a left-and-right direction, part of the plurality of high beam lighting tool units lights up in a reduced-light state in addition to the plurality of low beam lighting tool units.

In JP 2013-193561 A, a motorcycle in which low beam head lamps, high beam head lamps and sub-lamps are provided is described. The plurality of sub-lamps light up according to a bank angle of a vehicle body of the motorcycle under a condition in which the low beam head lamps are lit up.

JP 2008 222178 A discloses a head lamp for a two-wheeler, wherein when the two-wheeler travels in a low beam mode and its vehicle body is inclined tdo the right or left by a predetermined angle or more, a part or a plurality of lighting fixture units to be lit in a high beam mode are additionally lit in a dimmed condition.

### BRIEF SUMMARY OF THE INVENTION

In JP 2008-222178 A, the vehicle body banks in the left-and-right direction at a time of cornering of the vehicle, so that illumination ranges of the plurality of low beam lighting tool units change. Therefore, in the low beam mode, when the vehicle body of the motorcycle banks in the left-and-right direction, part of the plurality of high beam lighting tool units lights up in the reduced-light state in addition to the plurality of low beam lighting tool units. Thus, light distribution in which the illumination ranges of the plurality of low beam lighting tool units are supplemented is acquired. Alternatively, in JP 2013-193561 A, a head lamp system having a plurality of head lamps and a plurality of auxiliary sub-lamps is provided in the straddled vehicle, so that the light distribution in which the illumination ranges reduced due to the bank of the vehicle at the time of cornering of the vehicle are supplemented is acquired. On the one hand, it is desired that an increase in size of the head lamp system is inhibited.

An object of the present invention is to provide a head lamp system that can acquire preferable light distribution during an operation in a low beam mode and during an operation in a high beam mode while an increase in size is inhibited, and a straddled vehicle including the head lamp system.

The invention provides a head lamp system according to claim 1.
(1) A head lamp system according to one aspect of the present invention provided in a straddled vehicle includes a head lamp unit operable in a low beam mode and a high beam mode, a sub-lamp unit that supplements light distribution of the head lamp unit, and a controller that switches an operation of the head lamp unit between the low beam mode and the high beam mode, and controls an operation of the sub-lamp unit, wherein a virtual plane vertically standing up at a position in front of and spaced apart by a constant distance from the vehicle to face the vehicle is defined, and a first main illumination range and a second main illumination range are defined on the virtual plane, the second main illumination range includes a region located at a position further upward than an upper end of the first main illumination range, has a width smaller than a width of the first main illumination range in a left-and-right direction, and located within the width of the first main illumination range, the head lamp unit irradiates the first main illumination range with light and does not irradiate the second main illumination range except for the first main illumination range with light during the operation in the low beam mode, and irradiates at least the second main illumination range with light during the operation in the high beam mode, a first auxiliary illumination range and a second auxiliary illumination range are defined on the virtual plane, the first auxiliary illumination range includes a region located at a position further upward than an upper end of a left half portion of the first main illumination range in a top-and-bottom direction and further leftward than a left end of the second main illumination range in the left-and-right direction, and the second auxiliary illumination range includes a region located at a position further upward than an upper end of a right half portion of the first main illumination range in the top-and-bottom direction and further rightward than a right end of the second main illumination range in the left-and-right direction, the sub-lamp unit includes a first sub-lamp that irradiates the first auxiliary illumination range with light, and a second sub-lamp that irradiates the second auxiliary illumination range with light, and the controller lights up the first sub-lamp when a leftward bank angle of the vehicle is equal to a predetermined first value or larger than the first value, during the operation of the head lamp unit in the low beam mode, lights up the second sub-lamp when a rightward bank angle of the vehicle is equal to a predetermined second value or larger than the second value, during the operation of the head lamp unit in the low beam mode, and keeps the first and second sub-lamps lit up at all times during the operation of the head lamp unit in the high beam mode.
   In this head lamp system, during the operation in the low beam mode, the first main illumination range is irradiated with light by the head lamp unit and the second main illumination range except for the first main illumination range is not irradiated with light. During the operation in the low beam mode, when the leftward bank angle of the vehicle is equal to the first value or larger than the first value, the first auxiliary illumination area is irradiated with light by the first sub-lamp. Thus, an area ahead of the vehicle on the left is brightly illuminated at the time of cornering leftward of the vehicle. During the operation in the low beam mode, when the rightward bank angle of the vehicle is equal to the second value or larger than the second value, the second auxiliary illumination range is irradiated with light by the second sub-lamp. Thus, an area ahead of the vehicle on the right is brightly illuminated at the time of cornering rightward of the vehicle.
   During the operation in the high beam mode, at least the second main illumination range is irradiated with light by the head lamp unit. In this case, the light from the head lamp unit is concentrated in a relatively narrow range. Therefore, the light can reach a far distance without an increase in size of the head lamp unit. Further, during the operation in the high beam mode, the first and second auxiliary illumination ranges are irradiated with light at all times by the first and second sub-lamps. In this case, the high beam light distribution that is expanded to the left and right is acquired by the second main illumination range and the first and second auxiliary illumination ranges. Thus, the area farther front ahead and the areas farther left and right of the vehicle can be brightly illuminated when the vehicle is travelling in a straight line and before the vehicle enters a curve. Therefore, a rider easily confirms the conditions of the left and right of the vehicle when the vehicle is travelling in a straight line, and easily confirms the condition of the road surface before the vehicle enters a curve. It is not necessary to increase the size of the head lamp unit or provide another sub-lamp in order to acquire the high beam light distribution that is expanded to the left and right.
   As a result, it is possible to realize the preferable light distribution during the operation in the low beam mode and during the operation in the high beam mode while an increase in size of the head lamp system is inhibited.
   A third auxiliary illumination range and a fourth auxiliary illumination range are further defined on the virtual plane, the third auxiliary illumination range includes a region located at a position further upward than an upper end of the first auxiliary illumination range in the top-and-bottom direction and further leftward than the left end of the second main illumination range in the left-and-right direction, and the fourth auxiliary illumination range includes a region located at a position further upward than an upper end of the second auxiliary illumination range in the top-and-bottom direction and further rightward than the right end of the second main illumination range in the left-and-right direction, the sub-lamp unit further includes a third sub-lamp that irradiates the third auxiliary illumination range with light, and a fourth sub-lamp that irradiates the fourth auxiliary illumination range with light, and the controller lights up the third sub-lamp when the leftward bank angle of the vehicle is equal to a third value that is larger than the first value or larger than the third value, during the operation of the head lamp unit in the low beam mode, lights up the fourth sub-lamp when the rightward bank angle of the vehicle is equal to a fourth value that is larger than the second value or larger than the fourth value, during the operation of the head lamp unit in the low beam mode, lights up the third sub-lamp when the leftward bank angle of the vehicle is equal to a fifth value or larger than the fifth value, during the operation of the head lamp unit in the high beam mode, and lights up the fourth sub-lamp when the rightward bank angle of the vehicle is equal to a sixth value or larger than the sixth value, during the operation of the head lamp unit in the high beam mode.
   Even when the bank angle of the vehicle at the time of cornering of the vehicle is large, this configuration causes the area ahead of the vehicle on the left or the area ahead of the vehicle on the right to be brightly illuminated. Thus, even when the bank angle of the vehicle at the time of cornering of the vehicle is large, the preferable light distribution can be realized.
(2) The head lamp unit may include a first head lamp and a second head lamp, the first head lamp may irradiate the first main illumination range with light during the operation in the low beam mode, and the second head lamp may irradiate the second main illumination range with light during the operation in the high beam mode.
   In this case, the operation of the head lamp unit can be easily switched between the low beam mode and the high beam mode.
(3) The first head lamp may irradiate the first main illumination range with light during the operation in the high beam mode.
   In this case, it is possible to brightly illuminate an area ahead of and relatively close to the vehicle even during the operation in the high beam mode while an increase in size of the head lamp system is inhibited. Thus, it is possible to realize the preferable light distribution during the operation in the low beam mode and during the operation in the high beam mode while an increase in size of the head lamp system is inhibited.
(4) The first main illumination range may have a main cut-off line that extends in the left-and-right direction, the first auxiliary illumination range may have a first cut-off line that obliquely extends leftward and upward with respect to the main cut-off line, and the second auxiliary illumination range may have a second cut-off line that obliquely extends rightward and upward with respect to the main cut-off line.
   In this case, during the operation in the low beam mode, an area ahead of the vehicle on the left is more brightly illuminated at the time of cornering leftward of the vehicle, and an area ahead of the vehicle on the right is more brightly illuminated at the time of cornering rightward of the vehicle without an excessive increase in brightness of the area front ahead of the vehicle. Further, during the operation in the high beam mode, areas even farther left and right of the vehicle are brightly illuminated without an excessive increase in brightness in the area front ahead of the vehicle. Thus, more preferable light distribution can be realized during the operation in the low beam mode and during the operation in the high beam mode.
(6) The third value and the fifth value may be equal to each other, and the fourth value and the sixth value may be equal to each other.
   In this case, the bank angle of the vehicle of when the third sub-lamp lights up during the operation in the low beam mode and the bank angle of the vehicle of when the third sub-lamp lights up during the operation in the high beam mode are equal to each other. Further, the bank angle of the vehicle of when the fourth sub-lamp lights up during the operation in the low beam mode and the bank angle of the vehicle of when the fourth sub-lamp lights up during the operation in the high beam mode are equal to each other. Thus, the common control can be used to light up the third and fourth sub-lamps during the operation in the low beam mode and during the operation in the high beam mode. As a result, the control of the sub-lamp unit becomes easy.
(7) The first main illumination range may have a main cut-off line that extends in the left-and-right direction, the first auxiliary illumination range may have a first cut-off line that obliquely extends leftward and upward with respect to the main cut-off line, the second auxiliary illumination range may have a second cut-off line that obliquely extends rightward and upward with respect to the main cut-off line, the third auxiliary illumination range may have a third cut-off line that obliquely extends leftward and upward with respect to the first cut-off line, and the fourth auxiliary illumination range may have a fourth cut-off line that obliquely extends rightward and upward with respect to the second cut-off line.
   During the operation in the low beam mode or during the operation in the high beam mode, even when the vehicle largely banks leftward at the time of cornering leftward, this configuration causes the area ahead of the vehicle on the left to be more brightly illuminated. Further, during the operation in the low beam mode or during the operation in the high beam mode, even when the vehicle largely banks rightward at the time of cornering rightward, the area ahead of the vehicle on the right is more brightly illuminated. Thus, even when the bank angle of the vehicle at the time of cornering of the vehicle is large, more preferable light distribution can be realized.
(8) A fifth auxiliary illumination range and a sixth auxiliary illumination range may further be defined on the virtual plane, the fifth auxiliary illumination range may include a region located at a position further upward than an upper end of the third auxiliary illumination range in the top-and-bottom direction and further leftward than the left end of the second main illumination range in the left-and-right direction, the sixth auxiliary illumination range may include a region located at a position further upward than an upper end of the fourth auxiliary illumination range in the top-and-bottom direction and further rightward than the right end of the second main illumination range in the left-and-right direction, the sub-lamp unit may further include a fifth sub-lamp that irradiates the fifth auxiliary illumination range with light, and a sixth sub-lamp that irradiates the sixth auxiliary illumination range with light, and the controller may light up the fifth sub-lamp when the leftward bank angle of the vehicle is equal to a seventh value that is larger than the third value or larger than the seventh value, during the operation of the head lamp unit in the low beam mode, may light up the sixth sub-lamp when the rightward bank angle of the vehicle is equal to a eighth value that is larger than the fourth value or larger than the eighth value, during the operation of the head lamp unit in the low beam mode, may light up the fifth sub-lamp when the leftward bank angle of the vehicle is larger than a ninth value that is larger than the fifth value or larger than the ninth value, during the operation of the head lamp unit in the high beam mode, and may light up the sixth sub-lamp when the rightward bank angle of the vehicle is equal to a tenth value that is larger than the sixth value or larger than the tenth value, during the operation of the head lamp unit in the high beam mode.
   Even when the bank angle of the vehicle at the time of cornering of the vehicle is larger, this configuration causes the area ahead of the vehicle on the left or the area ahead of the vehicle on the right to be brightly illuminated. Thus, even when the bank angle of the vehicle is larger at the time of cornering of the vehicle, the preferable light distribution can be realized.
(9) The seventh value and the ninth value may be equal to each other, and the eighth value and the tenth value may be equal to each other.
   In this case, the bank angle of the vehicle of when the fifth sub-lamp lights up during the operation in the low beam mode and the bank angle of the vehicle of when the fifth sub-lamp lights up during the operation in the high beam mode are equal to each other. Further, the bank angle of the vehicle of when the sixth sub-lamp lights up during the operation in the low beam mode and the bank angle of the vehicle of when the sixth sub-lamp lights up during the operation in the high beam mode are equal to each other. Thus, the common control can be used to light up the fifth and sixth sub-lamps during the operation in the low beam mode and during the operation in the high beam mode. As a result, the control of the sub-lamp unit becomes easy.
(10) The first main illumination range may have a main cut-off line that extends in the left-and-right direction, the first auxiliary illumination range may have a first cut-off line that obliquely extends leftward and upward with respect to the main cut-off line, the second auxiliary illumination range may have a second cut-off line that obliquely extends rightward and upward with respect to the main cut-off line, the third auxiliary illumination range may have a third cut-off line that obliquely extends leftward and upward with respect to the first cut-off line, the fourth auxiliary illumination range may have a fourth cut-off line that obliquely extends rightward and upward with respect to the second cut-off line, the fifth auxiliary illumination range may have a fifth cut-off line that obliquely extends leftward and upward with respect to the third cut-off line, and the sixth auxiliary illumination range may have a sixth cut-off line that obliquely extends rightward and upward with respect to the fourth cut-off line.
   During the operation in the low beam mode or during the operation in the high beam mode, even when the vehicle more largely banks leftward at the time of cornering leftward, this configuration causes the area ahead of the vehicle on the left to be more brightly illuminated. Further, during the operation in the low beam mode or during the operation in the high beam mode, even when the vehicle more largely banks rightward at the time of cornering rightward, the area ahead of the vehicle on the right is more brightly illuminated. Thus, even when the bank angle of the vehicle at the time of cornering of the vehicle is larger, more preferable light distribution can be realized.
(11) A straddled vehicle according to another aspect of the present invention includes a vehicle body, a head lamp system according to the one aspect of the present invention, and a detector that detects a bank angle of the vehicle body, wherein the controller controls an operation of the sub-lamp unit based on the bank angle detected by the detector.
   In this straddled vehicle, the bank angle of the vehicle body is detected by the detector. In the head lamp system, during the operation in the low beam mode, the first main illumination range is irradiated with light by the head lamp unit, and the second main illumination range except for the first main illumination range is not irradiated with light. During the operation in the low beam mode, when the leftward bank angle of the vehicle is equal to the first value or larger than the first value, the first auxiliary illumination range is irradiated with light by the first sub-lamp. Thus, at the time of cornering leftward of the vehicle, the area ahead of the vehicle on the left is brightly illuminated. During the operation in the low beam mode, when the rightward bank angle of the vehicle is equal to the second value or larger than the second value, the second auxiliary illumination range is irradiated with light by the second sub-lamp. Thus, at the time of cornering rightward of the vehicle, the area ahead of the vehicle on the right is brightly illuminated.
   During the operation in the high beam mode, at least the second main illumination range is irradiated with light by the head lamp unit. In this case, the light from the head lamp unit is concentrated in a relatively narrow range. Therefore, the light can reach a far distance without an increase in size of the head lamp unit. Further, during the operation in the high beam mode, the first and second auxiliary illumination ranges are irradiated with light at all times by the first and second sub-lamps. In this case, the high beam light distribution that is expanded to the left and right is acquired by the second main illumination range, and the first and second auxiliary illumination ranges. Thus, the area farther front ahead and the areas farther left and right of the vehicle can be brightly illuminated when the vehicle is traveling in a straight line and before the vehicle enters a curve. Therefore, the rider easily confirms the conditions of the left and right of the vehicle when the vehicle is travelling in a straight line, and easily confirms the condition of the road surface before the vehicle enters a curve. It is not necessary to increase the size of the head lamp unit or provide another sub-lamp in order to acquire the high beam light distribution that is expanded to the left and right.
   As a result, it is possible to realize the preferable light distribution during the operation in the low beam mode and during the operation in the high beam mode while an increase in size of the head lamp system is inhibited.

### BRIEF DESCRIPTION OF THE SEVERAL VIEWS OF THE DRAWING

Fig. 1 is an enlarged side view of the left side of part of a motorcycle according to one embodiment of the present invention;
Fig. 2 is an enlarged front view showing part of the motorcycle of Fig. 1;
Fig. 3 is a diagram for explaining illumination ranges;
Figs. 4(a) and 4(b) are diagrams showing the illumination ranges defined on a screen;
Figs. 5(a) to 5(c) are diagrams showing other illumination ranges defined on the screen;
Fig. 6 is a block diagram showing a configuration of a head lamp system;
Fig. 7 is a diagram showing a relationship between a bank angle and the illumination range during an operation of the head lamp system in a low beam mode;
Figs. 8(a) and 8(b) are diagrams showing a relationship between the bank angle and the illumination ranges during the operation of the head lamp system in the low beam mode;
Fig. 9(a) and 9(b) are diagrams showing a relationship between the bank angle and the illumination ranges during the operation of the head lamp system in the low beam mode;
Figs. 10(a) and 10(b) are diagrams showing a relationship between the bank angle and the illumination ranges during the operation of the head lamp system in the low beam mode;
Fig. 11 is a diagram showing a relationship between the bank angle and the illumination ranges during an operation of the head lamp system in a high beam mode;
Figs. 12(a) and 12(b) are diagrams showing a relationship between the bank angle and the illumination ranges during the operation of the head lamp system in the high beam mode;
Figs. 13(a) and 13(b) are diagrams showing a relationship between the bank angle and the illumination ranges during the operation of the head lamp system in the high beam mode;
Fig. 14 is a flow chart showing a control of a left sub-lamp unit of Fig. 6; and
Fig. 15 is a flow chart showing a control of a right sub-lamp unit of Fig. 6.

### DESCRIPTION OF THE PREFERRED EMBODIMENTS

A straddled vehicle according to one embodiment of the present invention will be described below with reference to drawings. In the following description, a motorcycle is described as one example of the straddled vehicle. The straddled vehicle according to the present embodiment is a vehicle in which a vehicle body banks leftward at a time of cornering leftward of the vehicle and banks rightward at a time of cornering rightward of the vehicle.

### (1) Schematic Configuration of Motorcycle

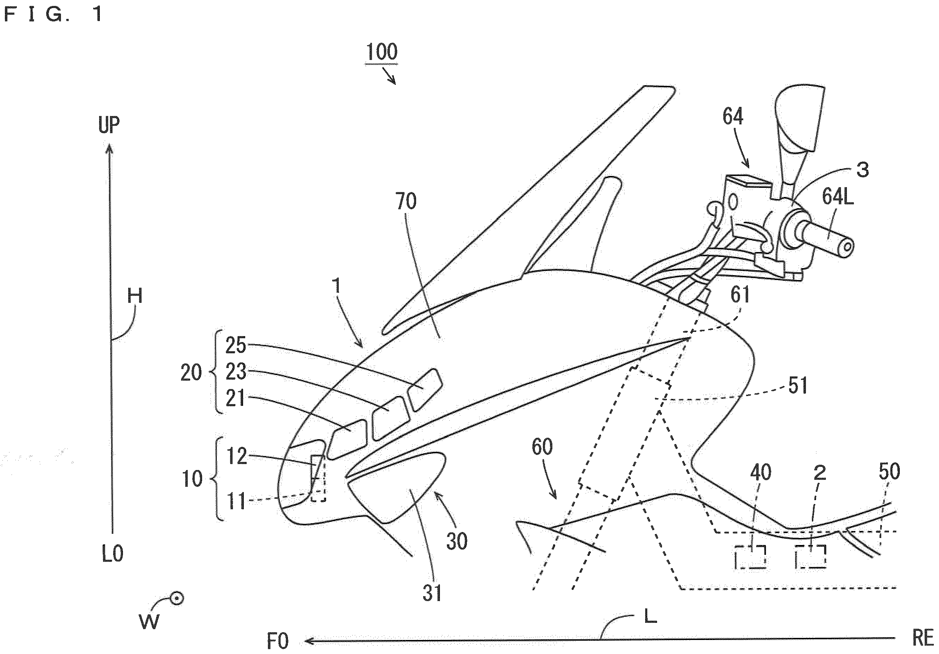

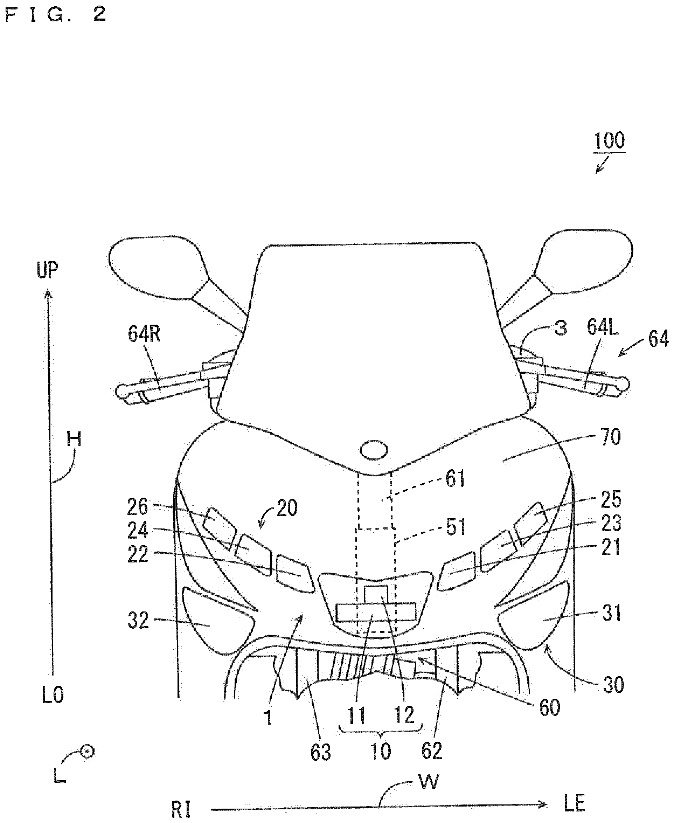

Fig. 1 is an enlarged side view of the left side of part of the motorcycle according to one embodiment of the present invention. Fig. 2 is an enlarged front view showing part of the motorcycle 100 of Fig. 1. In Figs. 1 and 2, the motorcycle 100 standing up to be perpendicular to a road surface is shown. In each of Fig. 1 and the subsequent diagrams, a front-and-rear direction L, a left-and-right direction W and a top-and-bottom direction H of the motorcycle 100 are indicated by arrows.

In the following description, a direction in which an arrow is directed in the front-and-rear direction L is referred to as forward, and its opposite direction is referred to as rearward. Further, a direction in which an arrow is directed in the right-and-left direction W is referred to as leftward, and its opposite direction is referred to as rightward. Further, a direction in which an arrow is directed in the top-and-bottom direction H is referred to as upward, and its opposite direction is referred to as downward. Further, in each diagram, forward, rearward, leftward, rightward, upward and downward are respectively indicated by reference numerals FO, RE, LE, RI, UP, LO. These directions are defined based on a direction in which a rider is facing on the motorcycle.

As shown in Fig. 1, the motorcycle 100 includes a vehicle body frame 50 that extends in the front-and-rear direction L. A front portion of the vehicle body frame 50 is bent upward and forward. The vehicle body frame 50 includes a head pipe 51 that extends downward and forward in the front portion.

As shown in Fig. 2, a front fork device 60 is attached to the head pipe 51 to be rotatable in the left and right direction. The front fork device 60 includes a steering shaft (a stem shaft) 61, a left fork pipe 62, a right fork pipe 63, a handle member 64, and a front wheel that is not shown.

The steering shaft 61 is inserted into the head pipe 51 to extend downward and forward. The left fork pipe 62 and the right fork pipe 63 are respectively arranged at the left and right of the steering shaft 61. The left fork pipe 62 and the right fork pipe 63 are connected to the steering shaft 61 by a plurality of connection members (an under bracket and an upper bracket) that are not shown.

A front wheel (not shown) is rotatably supported between a lower portion of the left fork pipe 62 and a lower portion of the right fork pipe 63. The handle member 64 includes a left handle 64L and a right handle 64R. The handle member 64 is connected to the left fork pipe 62 and the right fork pipe 63. The handle member 64 is operated, so that the front fork device 60 is rotated with respect to the head pipe 51.

A cowl 70 is provided to cover the head pipe 51 from the front and to cover part of the left fork pipe 62 and the right fork pipe 63 from both sides. The cowl 70 is attached to the vehicle body frame 50. A head lamp unit 10, a sub-lamp unit 20 and a turn indicator lamp unit 30 are attached to the cowl 70.

The head lamp unit 10 includes two head lamps 11, 12 operable in a low beam mode and a high beam mode. The low beam mode and the high beam mode will be described below. Each of the head lamps 11, 12 has one or plurality of light sources. The light source may be a light bulb, a light-emitting diode or another light emitter. The head lamps 11, 12 are arranged at the center of the cowl 70 in the left-and-right direction W. The head lamp 12 is arranged above the head lamp 11. In the left-and-right direction W, the width of the head lamp 12 is smaller than the width of the head lamp 11. In the left-and-right direction W, the center of each of the head lamps 11, 12 is located at the center of the cowl 70.

The sub-lamp unit 20 includes a plurality (six in the present example) of sub-lamps 21, 22, 23, 24, 25, 26 that supplement light distribution of the head lamp unit 10. Each of the sub-lamps 21 to 26 includes one or plurality of light sources. The light source may be a light bulb, a light-emitting diode or another light emitter. In Fig. 2, the sub-lamps 21, 23, 25 are arranged at the left of the head lamp unit 10, and the sub-lamps 22, 24, 26 are arranged at the right of the head lamp unit 10. In the present example, the sub-lamps 21, 23, 25 are arranged to be laterally symmetric with the sub-lamps 22, 24, 26 with respect to the head lamp unit 10.

In Fig. 2, the sub-lamp 23 is arranged at the upper left of the sub-lamp 21 to be adjacent to the sub-lamp 21, and the sub-lamp 25 is arranged at the upper left of the sub-lamp 23 to be adjacent to the sub-lamp 23. The sub-lamp 24 is arranged at the upper right of the sub-lamp 22 to be adjacent to the sub-lamp 22, and the sub-lamp 26 is arranged at the upper right of the sub-lamp 24 to be adjacent to the sub-lamp 24.

When seen in side view in Fig. 1, the sub-lamp 21 is arranged at the upper back of the head lamp unit 10, the sub-lamp 23 is arranged at the upper back of the sub-lamp 21, and the sub-lamp 25 is arranged at the upper back of the sub-lamp 23. When seen in opposite side view to Fig. 1, the sub-lamp 22 is arranged at the upper back of the head lamp unit 10, the sub-lamp 24 is arranged at the upper back of the sub-lamp 22, and the sub-lamp 26 is arranged at the upper back of the sub-lamp 24.

As shown in Fig. 2, the turn indicator lamp unit 30 is constituted by two turn indicator lamps 31, 32. The turn indicator lamp 31 is arranged at a position further leftward than the center of the cowl 70 in the left-and-right direction W, and the turn indicator lamp 32 is arranged at a position further rightward than the center of the cowl 70 in the left-and-right direction W. In the example of Fig. 2, the turn indicator lamp 31 is arranged below the sub-lamps 23, 25, and the turn indicator lamp 32 is arranged below the sub-lamps 24, 26.

As shown in Fig. 1, a controller 40 is provided at the vehicle body frame 50. The controller 40 is an ECU (Electronic Control Unit), for example. The controller 40 may be a microcomputer. A head lamp system 1 is constituted by the head lamp unit 10, the sub-lamp unit 20 and the controller 40. An operation of the head lamp system 1 and illumination ranges by the head lamp unit 10 and the sub-lamp unit 20 will be described below.

A detector 2 is provided at the vehicle body frame 50. The detector 2 includes a tilt detection sensor and a calculator. The tilt detection sensor is a three-axis angular velocity sensor (a three axis gyroscope), for example. The tilt detection sensor may be an angular velocity sensor, or another type of tilt detection sensor, for example. The tilt detection sensor detects a bank angle of the vehicle body frame 50 with respect to a vertical direction. The calculator calculates (estimates) the bank angle detected by the tilt detection sensor. The calculator supplies the calculated bank angle to the controller 40.

As shown in Fig. 2, an operation unit 3 is provided near the left handle 64L in the handle member 64. The operation unit 3 includes a switch for designating an operation mode of the head lamp unit 10. The rider can switch the operation mode of the head lamp unit 10 between the low beam mode and the high beam mode by operating the operation unit 3.

Further, the operation unit 3 includes a switch for operating the turn indicator lamp unit 30. The rider operates the operation unit 3 when indicating the direction of turning, for example. In this case, the controller 40 controls the turn indicator lamp unit 30 based on a state of the switch of the operation unit 3. Thus, the turn indicator lamp 31 or the turn indicator lamp 32 lights up.

### (2) Illumination Ranges

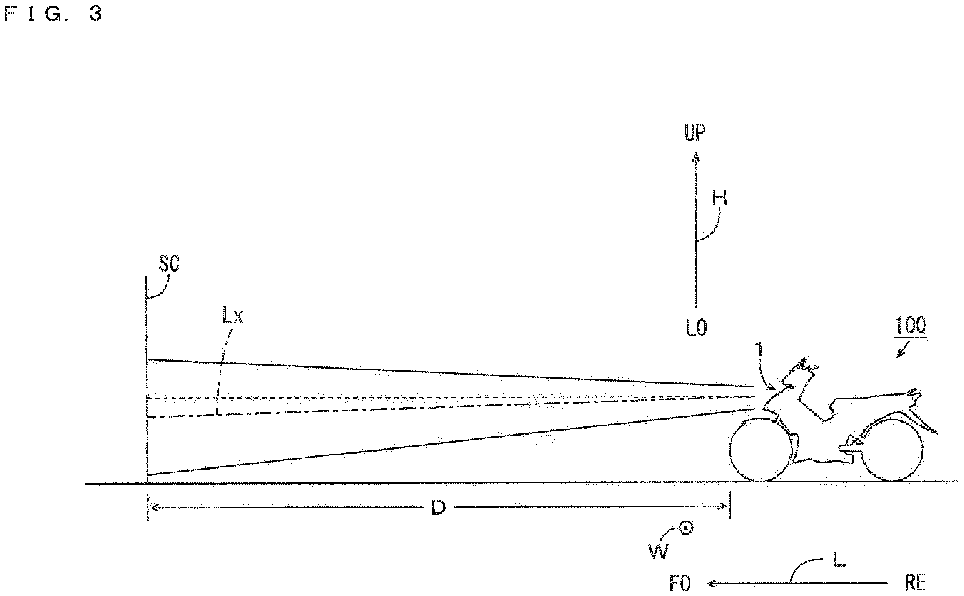

Fig. 3 is a diagram for explaining the illumination ranges. As shown in Fig. 3, a virtual screen SC vertically standing up at a position in front of and spaced apart by a constant distance D from the motorcycle 100 to face the motorcycle 100 is defined. The distance D is set to a distance by which the motorcycle 100 that travels at a predetermined speed is moved in a predetermined time period of "t" seconds, for example. That is, when the rider confirms an obstacle standing still at the position of the screen SC from the motorcycle 100, the motorcycle 100 reaches the position of the obstacle in the time period of "t" seconds. Therefore, the rider can perform the operation of the motorcycle 100 in order to avoid collision with the obstacle in the time period of "t" seconds.

A plurality of illumination ranges are defined on the screen SC. The plurality of illumination ranges on the screen SC are irradiated with light from the head lamps 11, 12 and the sub-lamps 21 to 26 of the head lamp system 1. The plurality of illumination ranges defined on the screen SC will be described below. The illumination ranges defined below are the illumination ranges corresponding to the motorcycle 100 vertically standing up. When the motorcycle 100 banks leftward or rightward, the illumination ranges tilt leftward or rightward in correspondence with the bank angle of the motorcycle 100.

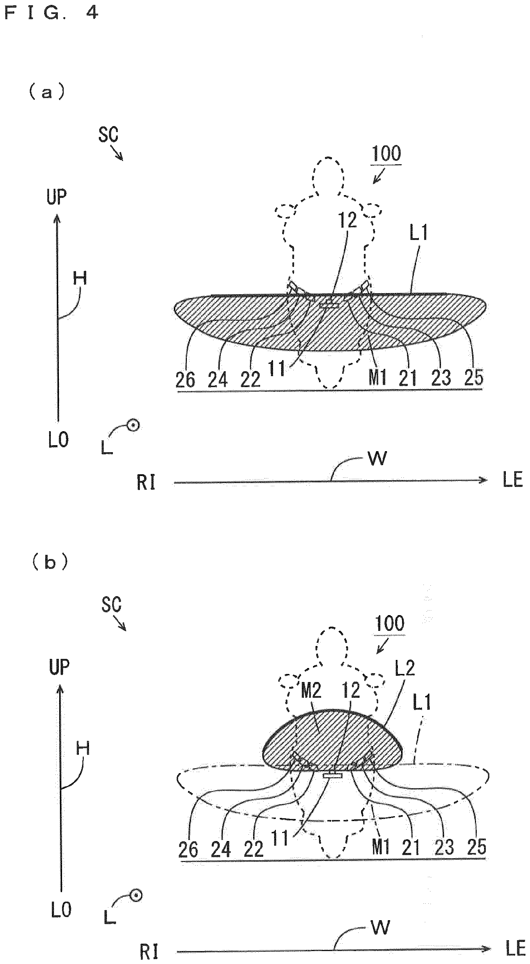

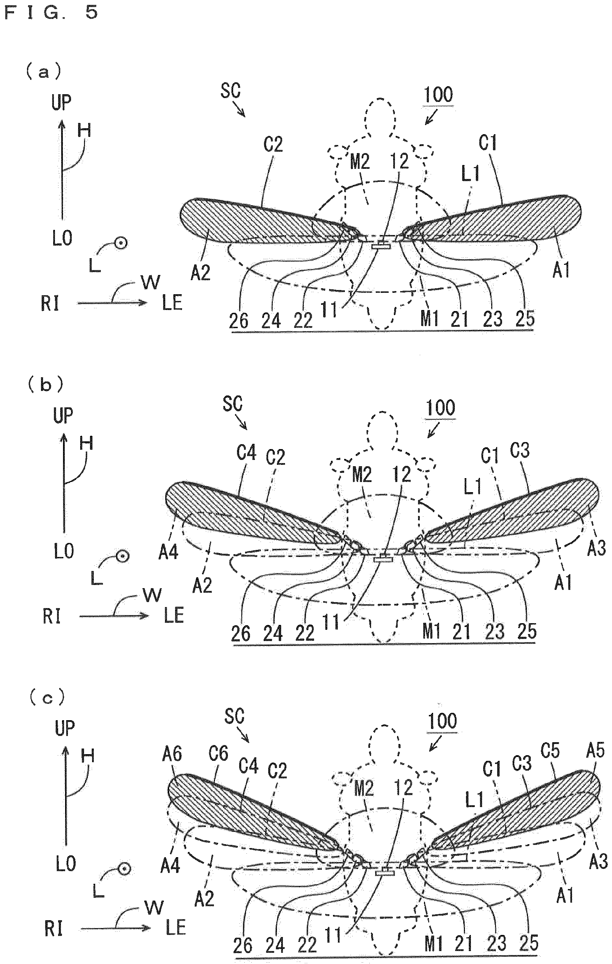

Figs. 4(a), 4(b) are diagrams showing the illumination ranges defined on the screen SC. In Figs. 4(a), 4(b), contours of the motorcycle 100 and the rider are indicated by dotted lines. This also applies to Figs. 5(a) to 5(c) and Figs. 7 to 13(b) described below.

The illumination range of Fig. 4(a) is referred to as a main illumination range M1. A cut-off line of the main illumination range M1 is referred to as a main cut-off line L1. In Fig. 4(a), the main illumination range M1 is indicated by a hatching pattern. Further, the main cut-off line L1 is indicated by a thick solid line.

The main cut-off line L1 is a boundary line having a maximum change in brightness between the main illumination range M1 and a region above the main illumination range M1 on the screen SC. That is, the main cut-off line L1 is a line that defines an upper edge of the main illumination range M1. The main cut-off line L1 is set as a line for inhibiting glare towards a vehicle driving ahead and an oncoming vehicle due to the light being emitted upward during the travelling of the motorcycle 100.

As shown in Fig. 4(a), the main illumination range M1 has a substantially oval shape extending in the left-and-right direction W. Further, the main illumination range M1 has the linear main cut-off line L1 extending in the left-and-right direction W. The head lamp 11 is provided to irradiate the main illumination range M1 with light with the motorcycle 100 vertically standing up. As shown in Fig. 3, with the motorcycle 100 vertically standing up, the head lamp 11 is provided such that its light axis Lx is directed further downward than a horizontal direction.

The illumination range of Fig. 4(b) is referred to as a main illumination range M2. A cut-off line of the main illumination range M2 is referred to as a main cut-off line L2. In Fig. 4(b), the main illumination range M2 is indicated by the hatching pattern. Further, the main illumination range M1 is indicated by a one-dot and dash line. Further, the main cut-off line L2 is indicated by a thick solid line.

The main cut-off line L2 is a boundary line having a maximum change in brightness between the main illumination range M2 and a region above the main illumination range M2 on the screen SC. That is, the main cut-off line L2 is a line that defines an upper edge of the main illumination range M2.

The main illumination range M2 includes a region located at a position further upward than the main cut-off line L1 of the main illumination range M1 and is semi-circular. Therefore, the main cut-off line L2 has a circular arc shape. Further, the main illumination range M2 has a width smaller than the width of the main illumination range M1 in the left-and-right direction W and is positioned within the width of the main illumination range M1. The head lamp 12 is provided to irradiate the main illumination range M2 with light with the motorcycle 100 vertically standing up.

Figs. 5(a), 5(b), 5(c) are diagrams showing other illumination ranges defined on the screen SC. Two illumination ranges of Fig. 5(a) are respectively referred to as auxiliary illumination ranges A1, A2. Cut-off lines of the auxiliary illumination ranges A1, A2 are respectively referred to as cut-off lines C1, C2. In Fig. 5(a), the auxiliary illumination ranges A1, A2 are respectively indicated by first and second hatching patterns. Further, the main illumination ranges M1, M2 are indicated by one-dot and dash lines. Further, the cut-off lines C1, C2 are indicated by thick solid lines.

The cut-off line C1 is a boundary line having a maximum change in brightness between the auxiliary illumination range A1 and a region above and right of the auxiliary illumination range A1 on the screen SC. That is, the cut-off line C1 is a line that defines a right upper edge of the auxiliary illumination range A1. The cut-off line C2 is a boundary line having a maximum change in brightness between the auxiliary illumination range A2 and a region above and left of the auxiliary illumination range A2 on the screen SC. That is, the cut-off line C2 is a line that defines a left upper edge of the auxiliary illumination range A2.

As shown in Fig. 5(a), the auxiliary illumination range A1 includes a region that is located at a position further upward than the upper end of the left half portion of the main illumination range M1 in the top-and-bottom direction H and further leftward than the left end of the main illumination range M2 in the left-and-right direction W. Further, the auxiliary illumination range A1 has a shape extending in the left-and-right direction W. The length of the auxiliary illumination range A1 in the top-and-bottom direction H gradually increases from the right end to the left end. The left end of the auxiliary illumination range A1 is located at a position further leftward than the left end of the main illumination range M1. The cut-off line C1 obliquely extends leftward and upward with respect to the main cut-off line L1. The sub-lamp 21 is provided to irradiate the auxiliary illumination range A1 with light with the motorcycle 100 vertically standing up.

The auxiliary illumination range A2 includes a region located at a position further upward than the upper end of the right half portion of the main illumination range M1 in the top-and-bottom direction H and further rightward than the right end of the main illumination range M2 in the left-and-right direction W. Further, the auxiliary illumination range A2 has a shape extending in the left-and-right direction W. The length of the auxiliary illumination range A2 in the top-and-bottom direction H gradually increases from the left end to the right end. The right end of the auxiliary illumination range A2 is located at a position further rightward than the right end of the main illumination range M1. The cut-off line C2 obliquely extends rightward and upward with respect to the main cut-off line L1. The sub-lamp 22 is provided to irradiate the auxiliary illumination range A2 with light with the motorcycle 100 vertically standing up.

Two illumination ranges of Fig. 5(b) are respectively referred to as auxiliary illumination ranges A3, A4. Cut-off lines of the auxiliary ranges A3, A4 are respectively referred to as cut-off lines C3, C4. In Fig. 5(b), the auxiliary illumination ranges A3, A4 are respectively indicated by the first and second hatching patterns. Further, the main illumination ranges M1, M2 and the auxiliary illumination ranges A1, A2 are indicated by one-dot and dash lines. Further, the cut-off lines C3, C4 are indicated by thick solid lines.

The cut-off line C3 is a boundary line having a maximum change in brightness between the auxiliary illumination range A3 and a region above and right of the auxiliary illumination range A3 on the screen SC. That is, the cut-off line C3 is a line that defines a right upper edge of the auxiliary illumination range A3. The cut-off line C4 is a boundary line having a maximum change in brightness between the auxiliary illumination range A4 and a region above and left of the auxiliary illumination range A4 on the screen SC. That is, the cut-off line C4 is a line that defines a left upper edge of the auxiliary illumination range A4.

As shown in Fig. 5(b), the auxiliary illumination range A3 includes a region located at a position further upward than the upper end of the auxiliary illumination range A1 in the top-and-bottom direction H and further leftward than the left end of the main illumination range M2 in the left-and-right direction W. Further, the auxiliary illumination range A3 has a shape that subtly obliquely extends leftward and upward with respect to the horizontal direction. The length of the auxiliary illumination range A3 in the top-and-bottom direction H gradually increases from the right end to the left end. The left end of the auxiliary illumination range A3 is located at a position further leftward than the left end of the auxiliary illumination range A1. The cut-off line C3 obliquely extends leftward and upward with respect to the cut-off line C1. The sub-lamp 23 is provided to irradiate the auxiliary illumination range A3 with light with the motorcycle 100 vertically standing up.

The auxiliary illumination range A4 includes a region located at a position further upward than the upper end of the auxiliary illumination range A2 in the top-and-bottom direction H and further rightward than the right end of the main illumination range M2 in the left-and-right direction W. Further, the auxiliary illumination range A4 has a shape that subtly obliquely extends rightward and upward with respect to the horizontal direction. The length of the auxiliary illumination range A4 in the top-and-bottom direction H gradually increases from the left end to the right end. The right end of the auxiliary illumination range A4 is located at a position further rightward than the right end of the auxiliary illumination range A2. The cut-off line C4 obliquely extends rightward and upward with respect to the cut-off line C2. The sub-lamp 24 is provided to irradiate the auxiliary illumination range A4 with light with the motorcycle 100 vertically standing up.

Two illumination ranges of Fig. 5(c) are respectively referred to as auxiliary illumination ranges A5, A6. Cut-off lines of the auxiliary illumination ranges A5, A6 are respectively referred to as cut-off lines C5, C6. In Fig. 5(c), the auxiliary illumination ranges A5, A6 are respectively indicated by the first and second hatching patterns. Further, the main illumination ranges M1, M2 and the auxiliary illumination ranges A1 to A4 are indicated by one-dot and dash lines. Further, the cut-off lines C5, C6 are indicated by thick solid lines.

The cut-off line C5 is a boundary line having a maximum change in brightness between the auxiliary illumination range A5 and a region above and right of the auxiliary illumination range A5 on the screen SC. That is, the cut-off line C5 is a line that defines a right upper edge of the auxiliary illumination range A5. The cut-off line C6 is a boundary line having a maximum change in brightness between the auxiliary illumination range A6 and a region above and left of the auxiliary illumination range A6 on the screen SC. That is, the cut-off line C6 is a line that defines a left upper edge of the auxiliary illumination range A6.

As shown in Fig. 5(c), the auxiliary illumination range A5 includes a region located at a position further upward than the upper end of the auxiliary illumination range A3 in the top-and-bottom direction H and further leftward than the left end of the main illumination range M2 in the left-and-right direction W. Further, the auxiliary illumination range A5 has a shape that obliquely extends leftward and upward with respect to the horizontal direction. The length of the auxiliary illumination range A5 in the top-and-bottom direction H gradually increases from the right end to the left end. The left end of the auxiliary illumination range A5 is located at a position substantially the same as the left end of the auxiliary illumination range A3 in the left-and-right direction W. The cut-off line C5 obliquely extends leftward and upward with respect to the cut-off line C3. The sub-lamp 25 is provided to irradiate the auxiliary illumination range A5 with light with the motorcycle 100 vertically standing up.

The auxiliary illumination range A6 includes a region located at a position further upward than the upper end of the auxiliary illumination range A4 in the top-and-bottom direction H and further rightward than the right end of the main illumination range M2 in the left-and-right direction W. Further, the auxiliary illumination range A6 has a shape obliquely extending rightward and upward with respect to the horizontal direction. The length of the auxiliary illumination range A6 in the top-and-bottom direction H gradually increases from the left end to the right end. The right end of the auxiliary illumination range A6 is located at a position substantially the same as the right end of the auxiliary illumination range A4 in the left-and-right direction W. The cut-off line C6 obliquely extends rightward and upward with respect to the cut-off line C4. The sub-lamp 26 is provided to irradiate the auxiliary illumination range A6 with light with the motorcycle 100 vertically standing up.

### (3) Head Lamp System

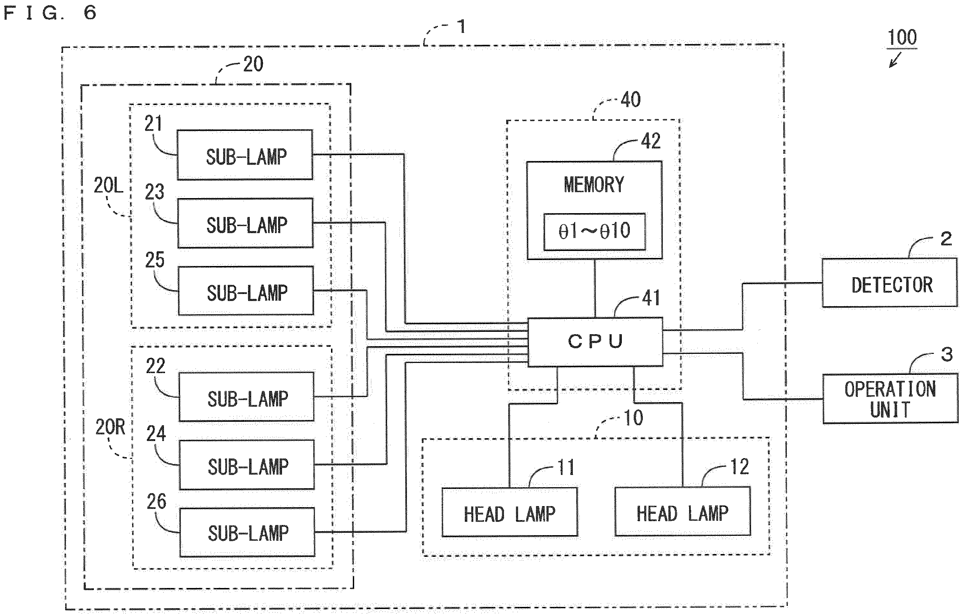

Fig. 6 is a block diagram showing a configuration of the head lamp system 1. As described above, the head lamp system 1 is constituted by the head lamp unit 10, the sub-lamp unit 20 and the controller 40.

The head lamp unit 10 includes the head lamps 11, 12. The sub-lamp unit 20 includes the sub-lamps 21 to 26. A portion of the sub-lamp unit 20 constituted by the sub-lamps 21, 23, 25 is referred to as a left sub-lamp unit 20L, a portion of the sub-lamp unit 20 constituted by the sub-lamps 22, 24, 26 is referred to as a right sub-lamp unit 20R.

As shown in Fig. 6, the controller 40 includes a CPU (Central Processing Unit) 41 and a memory 42. In the memory 42, threshold values of a plurality of preset bank angles are stored. In the present example, the 10 threshold values θ1 to θ10 are stored in the memory 42.

The CPU 41 is connected to the memory 42, the head lamps 11, 12, the sub-lamps 21 to 26, the detector 2 and the operation unit 3. The CPU 41 can easily switch the operation of the head lamp unit 10 between the low beam mode and the high beam mode by controlling to turn on and off the lights of the head lamps 11, 12. Further, the CPU 41 controls the operations of the sub-lamps 21 to 26 based on the plurality of threshold values stored in the memory 42, the bank angle detected by the detector 2, and the low beam mode and the high beam mode designated by the operation unit 3.

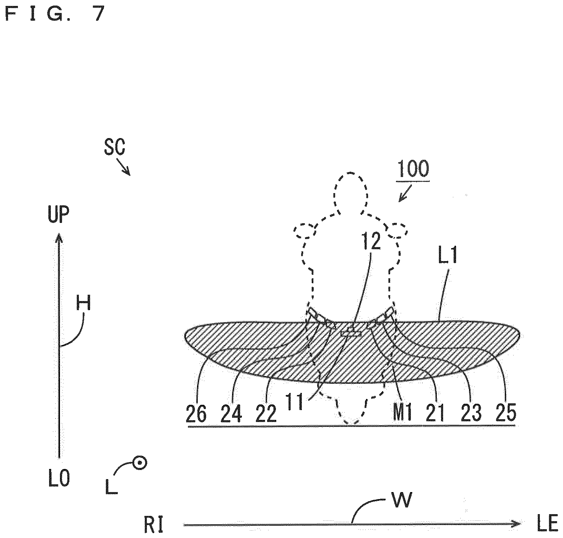

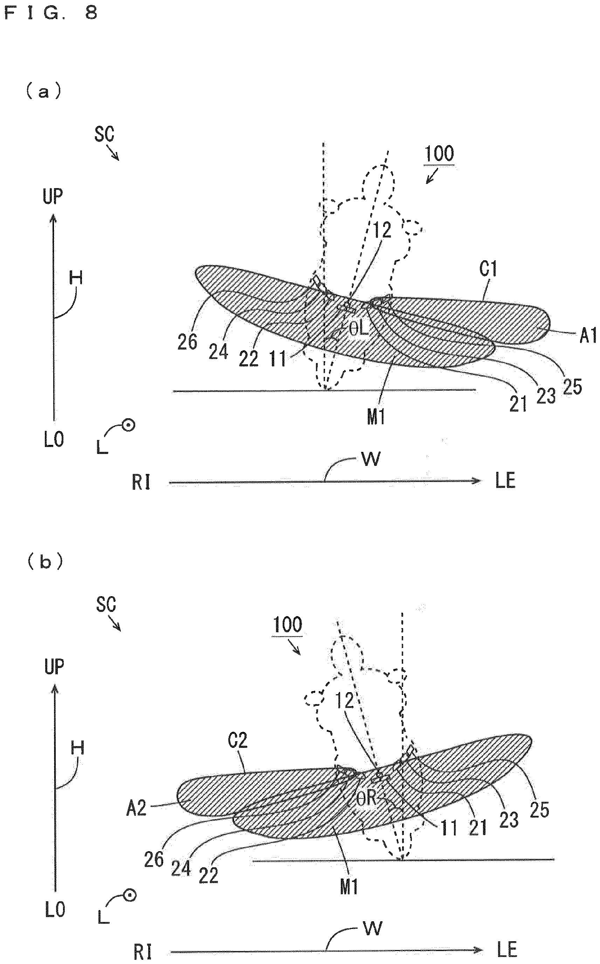

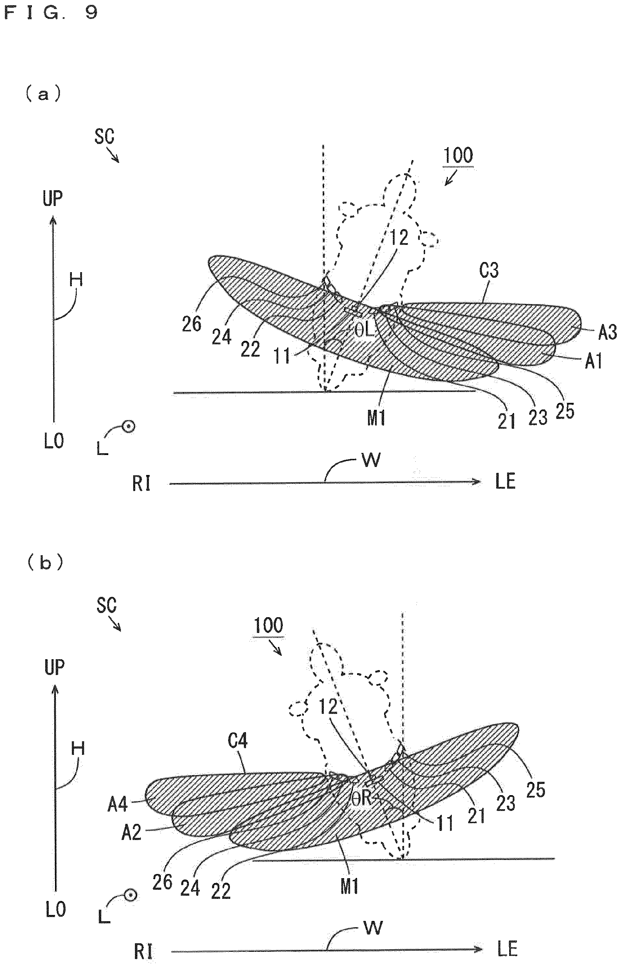

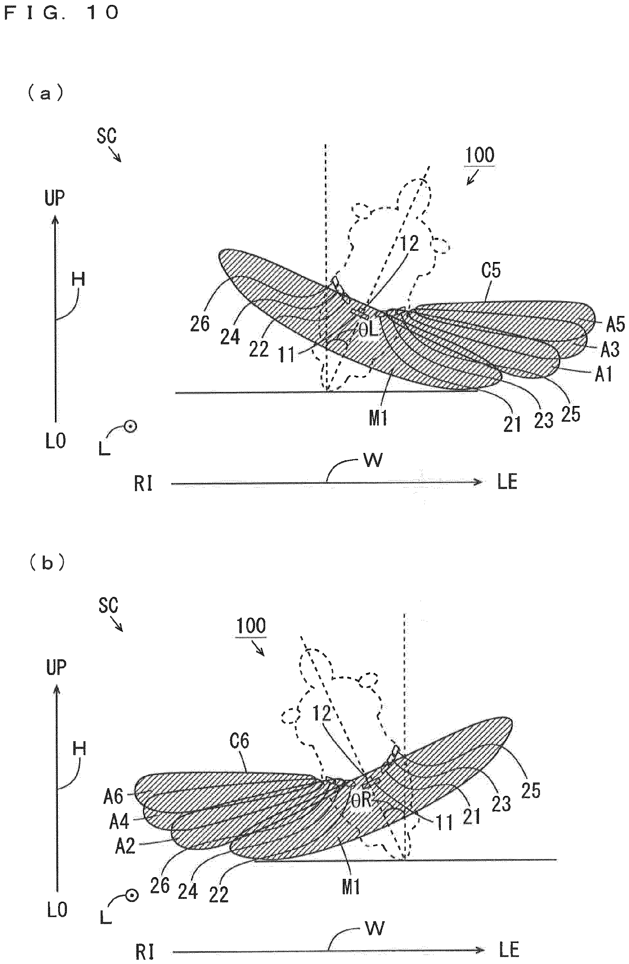

Figs. 7 to 10(b) are diagrams showing a relationship between the bank angle and the illumination ranges during the operation of the head lamp system 1 in the low beam mode. Fig. 7 shows the illumination range with the motorcycle 100 not banking. Figs. 8(a), 9(a) and 10(a) show the illumination ranges with the motorcycle 100 banking leftward. The bank angle of Fig. 10(a) is larger than the bank angle of Fig. 9(a), and the bank angle of Fig. 9(a) is larger than the bank angle of Fig. 8(a). Figs. 8(b), 9(b) and 10(b) show the illumination ranges with the motorcycle 100 banking rightward. The bank angle of Fig. 10(b) is larger than the bank angle of Fig. 9(b), and the bank angle of Fig. 9(b) is larger than the bank angle of Fig. 8(b).

During the operation in the low beam mode, the CPU 41 lights up the head lamp 11 as shown in Fig. 7. Thus, the head lamp 11 irradiates the main illumination range M1 with light. As a result, the range indicated by the hatching in Fig. 7 is irradiated with light. In this case, the main cut-off line L1 of the main illumination range M1 substantially horizontally extends. When the main illumination range M2 of Fig. 4(b) and the main illumination range M1 partially overlap with each other, the head lamp 11 does not irradiate the main illumination range M2 except for the main illumination range M1 with light. Thus, glare towards a vehicle driving ahead and an oncoming vehicle by the head lamp 11 can be inhibited.

When a leftward bank angle θL of the motorcycle 100 is equal to a threshold value θ1 or larger than the threshold value θ1, the CPU 41 lights up the sub-lamp 21 in addition to the head lamp 11 as shown in Fig. 8(a). Thus, the head lamp 11 irradiates the main illumination range M1 with light, and the sub-lamp 21 irradiates the auxiliary illumination range A1 with light. As a result, the ranges indicated by the hatching in Fig. 8(a) are irradiated with light. When the leftward bank angle θL of the motorcycle 100 is equal to the threshold value θ1, for example, the cut-off line C1 of the auxiliary illumination range A1 substantially horizontally extends.

When a rightward bank angle θR of the motorcycle 100 is equal to a threshold value θ2 or larger than the threshold value θ2, the CPU 41 lights up the sub-lamp 22 in addition to the head lamp 11 as shown in Fig. 8(b). Thus, the head lamp 11 irradiates the main illumination range M1 with light, and the sub-lamp 22 irradiates the auxiliary illumination range A2 with light. As a result, the ranges indicated by the hatching in Fig. 8(b) are irradiated with light. When the rightward bank angle θR of the motorcycle 100 is equal to the threshold value θ2, for example, the cut-off line C2 of the auxiliary illumination range A2 substantially horizontally extends.

When the leftward bank angle θL of the motorcycle 100 is equal to a threshold value θ3 or larger than the threshold value θ3, the CPU 41 lights up the sub-lamp 23 in addition to the head lamp 11 and the sub-lamp 21 as shown in Fig. 9(a). The threshold value θ3 is larger than the threshold value θ1. Thus, the head lamp 11 irradiates the main illumination range M1 with light, and the sub-lamps 21, 23 respectively irradiate the auxiliary illumination ranges A1, A3 with light. As a result, the ranges indicated by the hatching in Fig. 9(a) are irradiated with light. When the leftward bank angle θL of the motorcycle 100 is equal to the threshold value θ3, for example, the cut-off line C3 of the auxiliary illumination range A3 substantially horizontally extends.

When the rightward bank angle θR of the motorcycle 100 is equal to a threshold value θ4 or larger than the threshold value θ4, the CPU 41 lights up the sub-lamp 24 in addition to the head lamp 11 and the sub-lamp 22 as shown in Fig. 9(b). The threshold value θ4 is larger than the threshold value θ2. Thus, the head lamp 11 irradiates the main illumination range M1 with light, and the sub-lamps 22, 24 respectively irradiate the auxiliary illumination ranges A2, A4 with light. As a result, the ranges indicated by the hatching in Fig. 9(b) are irradiated with light. When the rightward bank angle θR of the motorcycle 100 is equal to the threshold value θ4, for example, the cut-off line C4 of the auxiliary illumination range A4 substantially horizontally extends.

When the leftward bank angle θL of the motorcycle 100 is equal to a threshold value θ7 or larger than the threshold value θ7, the CPU 41 lights up the sub-lamp 25 in addition to the head lamp 11 and the sub-lamps 21, 23 as shown in Fig. 10(a). The threshold value θ7 is larger than the threshold value θ3. Thus, the head lamp 11 irradiates the main illumination range M1 with light, and the sub-lamps 21, 23, 25 respectively irradiate the auxiliary illumination ranges A1, A3, A5 with light. As a result, the ranges indicated by the hatching in Fig. 10(a) are irradiated with light. When the leftward bank angle θL of the motorcycle 100 is equal to the threshold value θ7, for example, the cut-off line C5 of the auxiliary illumination range A5 substantially horizontally extends.

When the rightward bank angle θR of the motorcycle 100 is equal to a threshold value θ8 or larger than the threshold value θ8, the CPU 41 lights up the sub-lamp 26 in addition to the head lamp 11 and the sub-lamps 22, 24 as shown in Fig. 10(b). The threshold value θ8 is larger than the threshold value θ4. Thus, the head lamp 11 irradiates the main illumination range M1 with light, and the sub-lamps 22, 24, 26 respectively irradiate the auxiliary illumination ranges A2, A4, A6 with light. As a result, the ranges indicated by the hatching in Fig. 10(b) are irradiated with light. When the rightward bank angle θR of the motorcycle 100 is equal to the threshold value θ8, for example, the cut-off line C6 of the auxiliary illumination range A6 substantially horizontally extends.

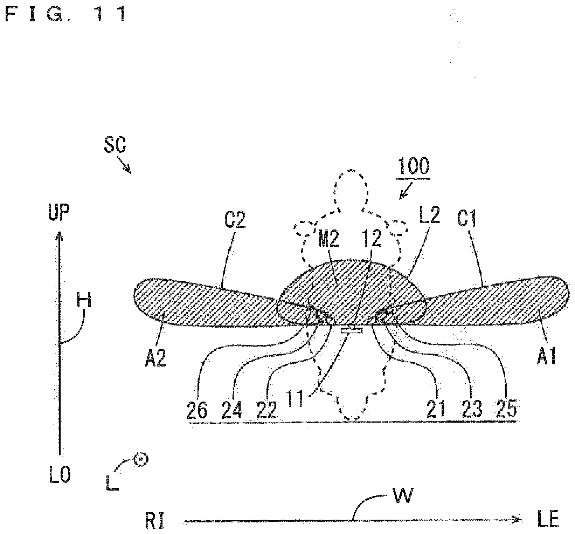

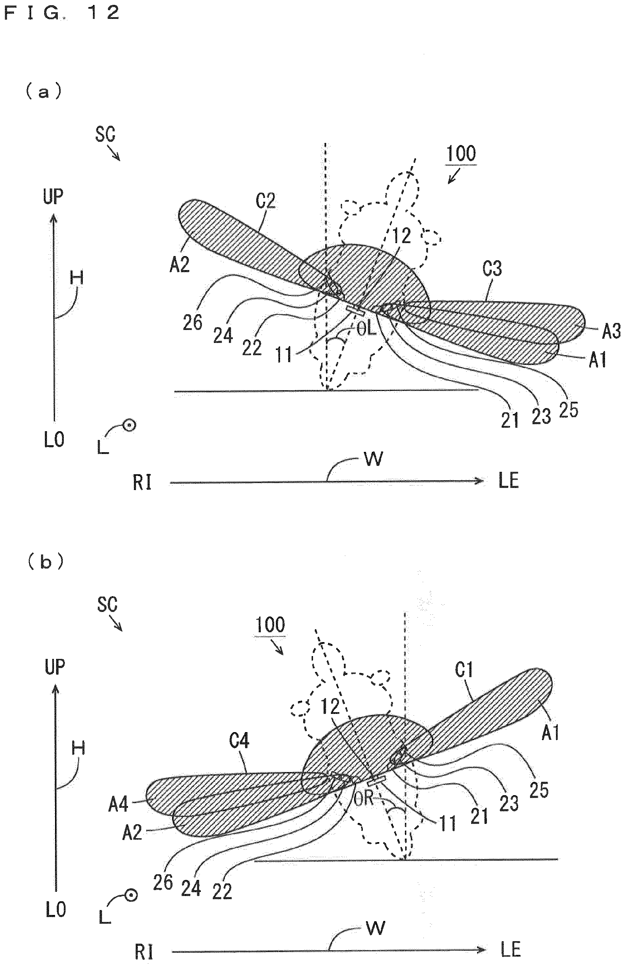

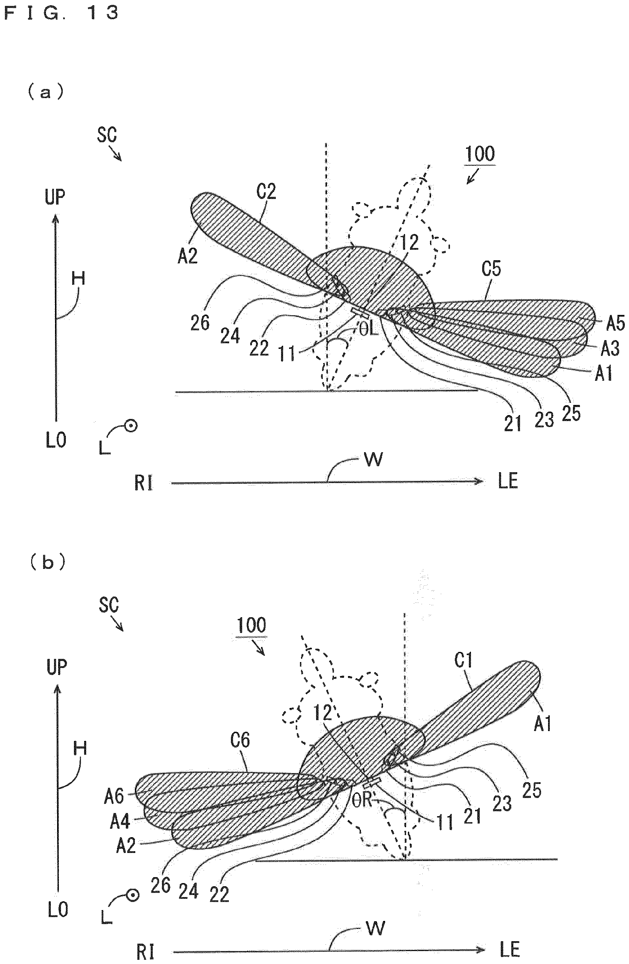

Figs. 11 to 13(b) are diagrams showing a relationship between the bank angle and the illumination ranges during the operation of the head lamp system 1 in the high beam mode. Fig. 11 shows the illumination ranges with the vehicle body frame 50 not banking. Figs. 12(a) and 13(a) show illumination ranges with the motorcycle 100 banking leftward. The bank angle of Fig. 13(a) is larger than the bank angle of Fig. 12(a). Figs. 12(b) and 13(b) show the illumination ranges with the motorcycle 100 banking rightward. The bank angle of Fig. 13(b) is larger than the bank angle of Fig. 12(b).

During the operation in the high beam mode, as shown in Fig. 11, the CPU 41 lights up the head lamp 12, and keeps the sub-lamps 21, 22 lit up at all times. Thus, the head lamp 12 irradiates the main illumination range M2 with light, and the sub-lamps 21, 22 respectively irradiate the auxiliary illumination ranges A1, A2 with light. In this case, a region located at a position further leftward than the left end of the main illumination range M2 and a region located at a position further rightward than the right end of the main illumination range M2 are brightly illuminated in addition to the main illumination range M2. As a result, the ranges indicated by the hatching in Fig. 11 are irradiated with light.

In the present embodiment, the intensity of the light emitted from each of the sub-lamps 21, 22 during the operation in the high beam mode is equal to the intensity of the light emitted from each of the sub-lamps 21, 22 during the operation in the low beam mode. However, as long as the preferable illumination ranges are acquired in the high beam mode, the intensity of the light emitted from each of the sub-lamps 21, 22 during the operation in the high beam mode may be smaller or larger than the intensity of the light emitted from each of the sub-lamps 21, 22 during the operation in the low beam mode.

When the leftward bank angle θL of the motorcycle 100 is equal to a threshold value θ5 or larger than the threshold value θ5, the CPU 41 lights up the sub-lamp 23 in addition to the head lamp 12 and the sub-lamps 21, 22 as shown in Fig. 12(a). Thus, the head lamp 12 irradiates the main illumination range M2 with light, and the sub-lamps 21 to 23 respectively irradiate the auxiliary illumination ranges A1 to A3 with light. As a result, the ranges indicated by the hatching in Fig. 12(a) are irradiated with light. When the leftward bank angle θL of the motorcycle 100 is equal to the threshold value θ5, for example, the cut-off line C3 of the auxiliary illumination range A3 substantially horizontally extends. The intensity of the light emitted from the sub-lamp 23 during the operation in the high beam mode is equal to the intensity of the light emitted from the sub-lamp 23 during the operation in the low beam mode.

When the rightward bank angle θR of the motorcycle 100 is equal to a threshold value θ6 or larger than the threshold value θ6, the CPU 41 lights up the sub-lamp 24 in addition to the head lamp 12 and the sub-lamps 21, 22 as shown in Fig. 12(b). Thus, the head lamp 12 irradiates the main illumination range M2 with light, and the sub-lamps 21, 22, 24 respectively irradiate the auxiliary illumination ranges A1, A2, A4 with light. As a result, the ranges indicated by the hatching in Fig. 12(b) are irradiated with light. When the rightward bank angle θR of the motorcycle 100 is equal to the threshold value θ6, for example, the cut-off line C4 of the auxiliary illumination range A4 substantially horizontally extends. The intensity of the light emitted from the sub-lamp 24 during the operation in the high beam mode is equal to the intensity of the light emitted from the sub-lamp 24 during the operation in the low beam mode.

When the left bank angle θL of the motorcycle 100 is equal to a threshold value θ9 or larger than the threshold value θ9, the CPU 41 lights up the sub-lamp 25 in addition to the head lamp 12 and the sub-lamps 21 to 23 as shown in Fig. 13(a). The threshold value θ9 is larger than the threshold value θ5. Thus, the head lamp 12 irradiates the main illumination range M2 with light, and the sub-lamps 21 to 23, 25 respectively irradiate the auxiliary illumination ranges A1 to A3, A5 with light. As a result, the ranges indicated by the hatching in Fig. 13(a) are irradiated with light. When the leftward bank angle θL of motorcycle 100 is equal to the threshold value θ9, for example, the cut-off line C5 of the auxiliary illumination range A5 substantially horizontally extends. The intensity of the light emitted from the sub-lamp 25 during the operation in the high beam mode is equal to the intensity of the light emitted from the sub-lamp 25 during the operation in the low beam mode.

When the rightward bank angle θR of the motorcycle 100 is equal to a threshold value θ10 or larger than the threshold value θ10, the CPU 41 lights up the sub-lamp 26 in addition to the head lamp 12 and the sub-lamps 21, 22, 24 as shown in Fig. 13(b). The threshold value θ10 is larger than the threshold value θ6. Thus, the head lamp 12 irradiates the main illumination range M2 with light, and the sub-lamps 21, 22, 24, 26 respectively irradiate the auxiliary illumination ranges A1, A2, A4, A6 with light. As a result, the ranges indicated by the hatching in Fig. 13(b) are irradiated with light. When the rightward bank angle θR of the motorcycle 100 is equal to the threshold value θ10, for example, the cut-off line C6 of the auxiliary illumination range A6 substantially horizontally extends. The intensity of the light emitted from the sub-lamp 26 during the operation in the high beam mode is equal to the intensity of the light emitted from the sub-light 26 during the operation in the low beam mode.

In the present example, the threshold value θ3 and the threshold value θ5 are equal to each other, and the threshold value θ4 and the threshold value θ6 are equal to each other. In this case, the bank angle θL of the motorcycle 100 of when the sub-lamp 23 lights up during the operation in the low beam mode and the bank angle θL of the motorcycle 100 of when the sub-lamp 23 lights up during the operation in the high beam mode are equal to each other. Further, the bank angle θR of the motorcycle 100 of when the sub-lamp 24 lights up during the operation in the low beam mode and the bank angle θR of the motorcycle 100 of when the sub-lamp 24 lights up during the operation in the high beam mode are equal to each other. Thus, the common control can be used to light up the sub-lamps 23, 24 during the operation in the low beam mode and the operation in the high beam mode. As a result, the control of the sub-lamp unit 20 becomes easy.

Similarly, in the present example, the threshold value θ7 and the threshold value θ9 are equal to each other, and the threshold value θ8 and the threshold value θ10 are equal to each other. In this case, the bank angle θL of the motorcycle 100 of when the sub-lamp 25 lights up during the operation in the low beam mode is equal to the bank angle θL of the motorcycle 100 of when the sub-lamp 25 lights up during the operation in the high beam mode. Further, the bank angle θR of the motorcycle 100 of when the sub-lamp 26 lights up during the operation in the low beam mode and the bank angle θR of the motorcycle 100 of when the sub-lamp 26 lights up during the operation in the high beam mode are equal to each other. Thus, the common control can be used to light up the sub-lamps 25, 26 during the operation in the low beam mode and during the operation in the high beam mode. As a result, the control of the sub-lamp unit 20 becomes easy.

### (4) Control of Sub-Lamp Unit

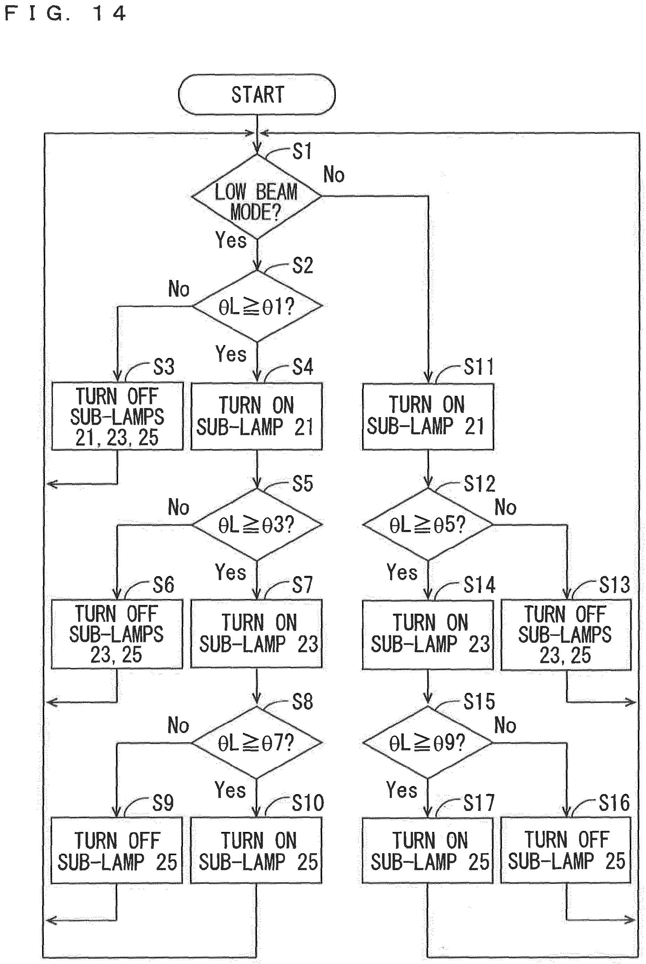

Fig. 14 is a flow chart showing the control of the left sub-lamp unit 20L of Fig. 6. The control of the left sub-lamp unit 20L by the CPU 41 will be described below according to the flow chart of Fig. 14. In the initial state, the sub-lamps 21, 23, 25 of the left sub-lamp unit 20L are in an unlit state.

First, the CPU 41 determines whether the low beam mode is designated (step S1). The rider can switch the operation mode between the low beam mode and the high beam mode by operating the switch (not shown) provided at the operation unit 3 of Fig. 6.

In step S1, when the low beam mode is designated, the CPU 41 brings the head lamp 11 of Fig. 6 into a lit state, and brings the head lamp 12 into the unlit state. Next, the CPU 41 determines whether the leftward bank angle θL of the motorcycle 100 is equal to the threshold value θ1 or larger than the threshold value θ1 (step S2).

In step S2, when the bank angle θL is smaller than the threshold value θ1, the CPU 41 brings the sub-lamps 21, 23, 25 into the unlit state (step S3), and returns to the process of step S1. On the one hand, in step S2, when the bank angle θL is equal to the threshold value θ1 or larger than the threshold value θ1, the CPU 41 brings the sub-lamp 21 into the lit state (step S4). After the process of step S4, the CPU 41 determines whether the leftward bank angle θL of the motorcycle 100 is equal to the threshold value θ3 or larger than the threshold value θ3 (step S5).

In step S5, when the bank angle θL is smaller than the threshold value θ3, the CPU 41 brings the sub-lamps 23, 25 into the unlit state (step S6), and returns to the process of step S1. On the one hand, in step S5, when the bank angle θL is equal to the threshold value θ3 or larger than the threshold value θ3, the CPU 41 brings the sub-lamp 23 into the lit state (step S7). After the process of step S7, the CPU 41 determines whether the leftward bank angle θL of the motorcycle 100 is equal to the threshold value θ7 or larger than the threshold value θ7 (step S8).

In step S8, when the bank angle θL is smaller than the threshold value θ7, the CPU 41 brings the sub-lamp 25 into the unlit state (step S9), and returns to the process of step S1. On the one hand, in step S8, when the bank angle θL is equal to the threshold value θ7 or larger than the threshold value θ7, the CPU 41 brings the sub-lamp 25 into the lit state (step S10), and returns to the process of step S1.

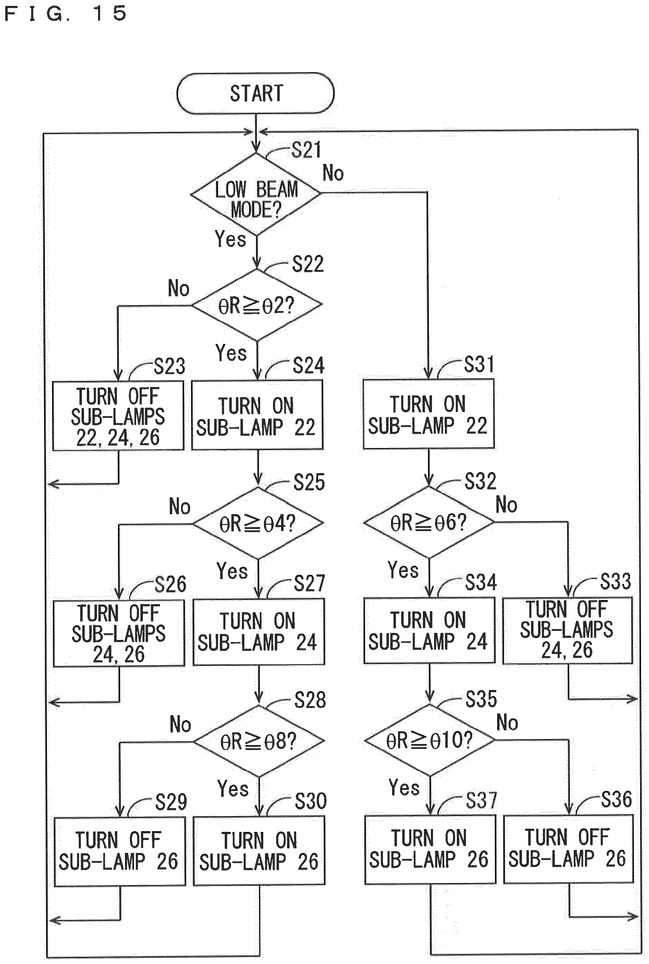

In step S1, when the low beam mode is not designated, that is, when the high beam mode is designated, the CPU 41 brings the head lamp 12 of Fig. 6 into the lit state, and brings the head lamp 11 into the unlit state. Further, the CPU 41 brings the sub-lamp 21 into the lit state (step S11). At this time, the CPU 41 also brings the sub-lamp 22 of the right sub-lamp unit 20R into the lit state (step S31 of Fig. 15, described below). After the process of step S11, the CPU 41 determines whether the leftward bank angle θL of the motorcycle 100 is equal to the threshold value θ5 or larger than the threshold value θ5 (step S12).

In step S12, when the bank angle θL is smaller than the threshold value θ5, the CPU 41 brings the sub-lamps 23, 25 into the unlit state (step S13), and returns to the process of step S1. On the one hand, in step S12, when the bank angle θL is equal to the threshold value θ5 or larger than the threshold value θ5, the CPU 41 brings the sub-lamp 23 into the lit state (step S14). After the process of step S14, the CPU 41 determines whether the leftward bank angle θL of the motorcycle 100 is equal to the threshold value θ9 or larger than the threshold value θ9 (step S15).

In step S15, when the bank angle θL is smaller than the threshold value θ9, the CPU 41 brings the sub-lamp 25 into the unlit state (step S16), and returns to the process of step S1. On the one hand, in step S15, when the bank angle θL is equal to the threshold value θ9 or larger than the threshold value θ9, the CPU 41 brings the sub-lamp 25 into the lit state (step S17), and returns to the process of step S1.

Fig. 15 is a flow chart showing the control of the right sub-lamp unit 20R of Fig. 6. The control of the right sub-lamp unit 20R by the CPU 41 will be described below according to the flow chart of Fig. 15. In the initial state, the sub-lamps 22, 24, 26 of the right sub-lamp unit 20R are in the unlit state.

First, the CPU 41 determines whether the low beam mode is designated (step S21). In step S21, when the low beam mode is designated, the CPU 41 determines whether the rightward bank angle θR of the motorcycle 100 is equal to the threshold value θ2 or larger than the threshold value θ2 (step S22).

In step S22, when the bank angle θR is smaller than the threshold value θ2, the CPU 41 brings the sub-lamps 22, 24, 26 into the unlit state (step S23), and returns to the process of step S21. On the one hand, in step S22, when the bank angle θR is equal to the threshold value θ2 or larger than the threshold value θ2, the CPU 41 brings the sub-lamp 22 into the lit state (step S24). After the process of step S24, the CPU 41 determines whether the rightward bank angle θR of the motorcycle 100 is equal to the threshold value θ4 or larger than the threshold value θ4 (step S25).

In step S25, when the bank angle θR is smaller than the threshold value θ4, the CPU 41 brings the sub-lamps 24, 26 into the unlit state (step S26), and returns to the process of step S21. On the one hand, in step S25, when the bank angle θR is equal to the threshold value θ4 or larger than the threshold value θ4, the CPU 41 brings the sub-lamp 24 into the lit state (step S27). After the process of step S27, the CPU 41 determines whether the rightward bank angle θR of the motorcycle 100 is equal to the threshold value θ8 or larger than the threshold value θ8 (step S28).

In step S28, when the bank angle θR is smaller than the threshold value θ8, the CPU 41 brings the sub-lamp 26 into the unlit state (step S29), and returns to the process of step S21. On the one hand, in step S28, when the bank angle θR is equal to the threshold value θ8 or larger than the threshold value θ8, the CPU 41 brings the sub-lamp 26 into the lit state (step S30), and returns to the process of step S21.

In step S21, when the high beam mode is designated, the CPU 41 brings the sub-lamp 22 into the lit state (step S31). At this time, the CPU 41 also brings the sub-lamp 21 of the left sub-lamp unit 20L into the lit state (step S11 of Fig. 14). After the process of step S31, the CPU 41 determines whether the rightward bank angle θR of the motorcycle 100 is equal to the threshold value θ6 or larger than the threshold value θ6 (step S32).

In step S32, when the bank angle θR is smaller than the threshold value θ6, the CPU 41 brings the sub-lamps 24, 26 into the unlit state (step S33), and returns to the process of step S21. On the one hand, in step S32, when the bank angle θR is equal to the threshold value θ6 or larger than the threshold value θ6, the CPU 41 brings the sub-lamp 24 into the lit state (step S34). After the process of step S34, the CPU 41 determines whether the rightward bank angle θR of the motorcycle 100 is equal to the threshold value θ10 or larger than the threshold value θ10 (step S35).

In step S35, when the bank angle θR is smaller than the threshold value θ10, the CPU 41 brings the sub-lamp 26 into the unlit state (step S36), and returns to the process of step S21. On the one hand, in step S35, when the bank angle θR is equal to the threshold value θ10 or larger than the threshold value θ10, the CPU 41 brings the sub-lamp 26 into the lit state (step S37), and returns to the process of step S21.

The control of the above-mentioned left sub-lamp unit 20L and right sub-lamp unit 20R is performed simultaneously. Thus, the illumination ranges of the sub-lamps 21 to 26 can be changed as shown in Figs. 7 to 13(b) based on the bank angle detected by the detector 2 and the low beam mode and the high beam mode designated by the operation unit 3.

### (5) Effects

In the head lamp system 1 according to the present embodiment, during the operation in the low beam mode, the main illumination range M1 is irradiated with light by the head lamp 11, and the main illumination range M2 except for the main illumination range M1 is not irradiated with light. During the operation in the low beam mode, when the leftward bank angle θL of the motorcycle 100 is equal to the threshold value θ1 or larger than the threshold value θ1, the auxiliary illumination range A1 is irradiated with light by the sub-lamp 21. Thus, at the time of cornering leftward of the vehicle, the area ahead of the vehicle on the left is brightly illuminated. During the operation in the low beam mode, when the rightward bank angle θR of the motorcycle 100 is equal to the threshold value θ2 or larger than the threshold value θ2, the auxiliary illumination range A2 is irradiated with light by the sub-lamp 22. Thus, at the time of cornering rightward of the vehicle, the area ahead of the vehicle on the right is brightly illuminated.

During the operation in the high beam mode, the main illumination range M2 is irradiated with light by the head lamp 12. In this case, the light from the head lamp 12 is concentrated in a relatively narrow range. Therefore, the light can reach a far distance without an increase in the size of the head lamp 12. Further, during the operation in the high beam mode, the auxiliary illumination ranges A1, A2 are irradiated with light at all times by the sub-lamps 21, 22. In this case, the high beam light distribution that is expanded to the left and right is acquired by the main illumination range M2 and the auxiliary illumination ranges A1, A2. Thus, the area farther front ahead and the area farther right and left of the vehicle can be brightly illuminated when the vehicle is travelling in a straight line and before the vehicle enters a curve. Therefore, the rider easily confirms the conditions of the left and right of the vehicle when the vehicle is travelling in a straight line, and easily confirms the condition of the road surface before the vehicle enters a curve. It is not necessary to increase the size of the head lamp 12 or provide another sub-lamp in order to acquire the high beam light distribution that is expanded to the left and right.

As a result, it is possible to realize the preferable light distribution during the operation in the low beam mode and during the operation in the high beam mode while an increase in size of the head lamp system 1 is inhibited.

Further, during the operation in the low beam mode, when the leftward bank angle θL of the motorcycle 100 is equal to the threshold value θ3 or larger than the threshold value θ3, the sub-lamp 23 lights up. When the rightward bank angle θR of the motorcycle 100 is equal to the threshold value θ4 or larger than the threshold value θ4, the sub-lamp 24 lights up. When the leftward bank angle θL of the motorcycle 100 is equal to the threshold value θ7 or larger than the threshold value θ7, the sub-lamp 25 lights up. When the rightward bank angle θR of the motorcycle 100 is equal to the threshold value θ8 or larger than the threshold value θ8, the sub-lamp 26 lights up.

During the operation in the high beam mode, when the leftward bank angle θL of the motorcycle 100 is equal to the threshold value θ5 or larger than the threshold value θ5, the sub-lamp 23 lights up. When the rightward bank angle θR of the motorcycle 100 is equal to the threshold value θ6 or larger than the threshold value θ6, the sub-lamp 24 lights up. When the leftward bank angle θL of the motorcycle 100 is equal to the threshold value θ9 or larger than the threshold value θ9, the sub-lamp 25 lights up. When the rightward bank angle θR of the motorcycle 100 is equal to the threshold value θ10 or larger than the threshold value θ10, the sub-lamp 26 lights up.

This configuration causes the area ahead of the motorcycle 100 on the left or the area ahead of the motorcycle 100 on the right to be appropriately and brightly illuminated according to the bank angle of the motorcycle 100 at the time of cornering of the vehicle. Thus, even when the bank angle of the motorcycle 100 at the time of cornering of the vehicle is large, the preferable light distribution can be realized.

Further, the main cut-off line L1 of the main illumination range M1 extends in the left-and-right direction. The cut-off line C1 of the auxiliary illumination range A1 obliquely extends leftward and upward with respect to the main cut-off line L1. The cut-off line C2 of the auxiliary illumination range A2 obliquely extends rightward and upward with respect to the main cut-off line L1. The cut-off line C3 of the auxiliary illumination range A3 obliquely extends leftward and upward with respect to the cut-off line C1. The cut-off line C4 of the auxiliary illumination range A4 obliquely extends rightward and upward with respect to the cut-off line C2. The cut-off line C5 of the auxiliary illumination range A5 obliquely extends leftward and upward with respect to the cut-off line C3. The cut-off line C6 of the auxiliary illumination range A6 obliquely extends rightward and upward with respect to the cut-off line C4.

In this case, during the operation in the low beam mode, the area ahead of the vehicle on the left is more brightly illuminated during the cornering leftward of the vehicle and the area ahead of the vehicle on the right is more brightly illuminated at the time of cornering rightward of the vehicle without an excessive increase in brightness in the area front ahead of the vehicle. Further, during the operation in the high beam mode, the areas even farther left and right of the vehicle are brightly illuminated without an excessive increase in brightness in the area front ahead of the vehicle.

Further, during the operation in the low beam mode or during the operation in the high beam mode, even when the vehicle largely banks leftward at the time of cornering leftward, the area ahead of the vehicle on the left is appropriately and brightly illuminated according to the bank angle. Similarly, during the operation in the low beam mode or during the operation in the high beam mode, even when the vehicle largely banks rightward at the time of cornering rightward, the area ahead of the vehicle on the right is appropriately and brightly illuminated according to the bank angle. Thus, the preferable light distribution can be realized during the operation in the low beam mode and during the operation in the high beam mode.

### (6) Other Embodiments

(a) While the head lamp 11 does not light up during the operation in the high beam mode in the above-mentioned embodiment, the invention is not limited to this. The head lamp 11 may light up in addition to the head lamp 12 during the operation in the high beam mode. In this case, even during the operation in the high beam mode, an area ahead of and relatively close to the motorcycle 100 can be brightly illuminated while an increase in size of the head lamp system 1 is inhibited.
(b) In the above-mentioned embodiment, when the leftward bank angle θL of the motorcycle 100 is smaller than the threshold vale θ1 during the operation in the low beam mode, the sub-lamp 21 does not light up. However, the invention is not limited to this. Also when the leftward bank angle θL of the motorcycle 100 is smaller than the threshold value θ1 during the operation in the low beam mode, the sub-lamp 21 may light up. In this case, the intensity of the light emitted from the sub-lamp 21 is set smaller than the intensity of the light emitted from the sub-lamp 21 of when the leftward bank angle θL of the motorcycle 100 is equal to the threshold value θ1 or larger than the threshold value θ1.
   Similarly, in the above-mentioned embodiment, during the operation in the low beam mode, when the rightward bank angle θR of the motorcycle 100 is smaller than the threshold value θ2, the sub-lamp 22 does not light up. However, the invention is not limited to this. Also when the rightward bank angle θR of the motorcycle 100 is smaller than the threshold value θ2 during the operation in the low beam mode, the sub-lamp 22 may light up. In this case, the intensity of the light emitted from the sub-lamp 22 is set smaller than the intensity of the light emitted from the sub-lamp 22 of when the rightward bank angle θR of the motorcycle 100 is equal to the threshold value θ2 or larger than the threshold value θ2.
(c) While the sub-lamps 23 to 26 are provided in the sub-lamp unit 20 in addition to the sub-lamps 21, 22 in the above-mentioned embodiment, the invention is not limited to this. The sub-lamps 21, 22 may be provided and the sub-lamps 23 to 26 do not have to be provided in the sub-lamp unit 20. Alternatively, the sub-lamps 21 to 24 may be provided and the sub-lamps 25, 26 do not have to be provided in the sub-lamp unit 20.
(d) While the head lamp 12 irradiates only the main illumination range M2 with light in the above-mentioned embodiment, the invention is not limited to this. The head lamp 12 may irradiate surroundings of the main illumination range M2 with light in addition to the main illumination range M2.
(e) While the threshold value θ3 and the threshold value θ5 are equal to each other and the threshold value θ4 and the threshold value θ6 are equal to each other in the above-mentioned embodiment, the invention is not limited to this. The threshold value θ3 and the threshold value θ5 do not have to be equal to each other, and the threshold value θ4 and the threshold value θ6 do not have to be equal to each other.
   Similarly, while the threshold value θ7 and the threshold value θ9 are equal to each other and the threshold value θ8 and the threshold value θ10 are equal to each other in the above-mentioned embodiment, the invention is not limited to this. The threshold value θ7 and the threshold value θ9 do not have to be equal to each other, and the threshold value θ8 and the threshold value θ10 do not have to be equal to each other.
(f) In the above-mentioned embodiment, as long as a relationship that the threshold value θ7 is larger than the threshold value θ3 and the threshold value θ3 is larger than the threshold value θ1 is satisfied, differences in angle among the threshold values θ1, θ3, θ7 are not limited. For example, a difference in angle between the threshold values θ1, θ3 and a difference in angle between the threshold values θ3, θ7 may be equal to each other. Alternatively, the difference in angle between the threshold values θ1, θ3 may be larger or smaller than the difference in angle between the threshold values θ3, θ7.
   Similarly, in the above-mentioned embodiment, as long as a relationship that the threshold value θ8 is larger than the threshold value θ4 and the threshold value θ4 is larger than the threshold value θ2 is satisfied, differences in angle among the threshold values θ2, θ4, θ8 are not limited. For example, a difference in angle between the threshold values θ2, θ4 and a difference in angle between the threshold values θ4, θ8 may be equal to each other. Alternatively, the difference in angle between the threshold value θ2, θ4 may be larger or smaller than the difference in angle between the threshold values θ4, θ8.
(g) While the head lamp unit 10 is arranged at the center of the vehicle in the above-mentioned embodiment, the invention is not limited to this. As long as a relationship that the main illumination range M2 includes a region located at a position further upward than the upper end of the main illumination range M1, has a width smaller than the width of the main illumination range M1 in the left-and-right direction, and is located within the width of the main illumination range M1 is satisfied, the head lamps 11, 12 may be arranged at any positions.
   For example, the head lamp 11 that irradiates the main illumination range M1 with light, and the head lamp 12 that irradiates the main illumination range M2 with light may be arranged in the left-and-right direction. Alternatively, the head lamp 11 that irradiates the main illumination range M1 with light and the head lamp 12 that irradiates the main illumination range M2 with light may be arranged at positions vertically opposite to the example of Fig. 2.
(h) While the head lamp unit 10 has the one head lamp 11 that irradiates the main illumination range M1 with light and the one head lamp 12 that irradiates the main illumination range M2 with light in the above-mentioned embodiment, the invention is not limited to this. As long as a relationship that the main illumination range M2 includes a region located at a position further upward than the upper end of the main illumination range M1, has a width smaller than the width of the main illumination range M1 in the left-and-right direction, and is positioned within the width of the main illumination range M1 is satisfied, the head lamp unit 10 may have any number of the head lamps 11, 12.
   For example, the head lamp unit 10 may have the plurality of head lamps 11 that irradiate the main illumination range M1 with light and the one head lamp 12 that irradiates the main illumination range M2 with light. Alternatively, the head lamp unit 10 may have the one head lamp 11 that irradiates the main illumination range M1 with light and the plurality of head lamps 12 that irradiate the main illumination range M2 with light. Alternatively, the head lamp unit 10 may have the plurality of head lamps 11 that irradiate the main illumination range M1 with light and the plurality of head lamps 12 that irradiate the main illumination range M2 with light.
(i) In the above-mentioned embodiment, the sub-lamp 21 is arranged in the left portion of the vehicle, and the sub-lamp 22 is arranged in the right portion of the vehicle. However, the invention is not limited to this. As long as a relationship that the auxiliary illumination range A1 includes a region located at a position further upward than the upper end of the left half portion of the main illumination range M1 in the top-and-bottom direction and further leftward than the left end of the main illumination range M2 in the left-and-right direction, and the auxiliary illumination range A2 includes a region located at a position further upward than the upper end of the right half portion of the main illumination range M1 in the top-and-bottom direction and further rightward than the right end of the main illumination range M2 in the right-and-left direction is satisfied, the sub-lamps 21, 22 may be arranged at any positions.
   For example, the sub-lamp 21 that irradiates the auxiliary illumination range A1 with light and the sub-lamp 22 that irradiates the auxiliary illumination range A2 with light may be arranged at the center of the vehicle. In this case, the sub-lamps 21, 22 may be arranged in the top-and-bottom direction, or arranged in the left-and-right direction. Alternatively, the sub-lamp 21 that irradiates the auxiliary illumination range A1 with light and the sub-lamp 22 that irradiates the auxiliary illumination range A2 with light may be arranged at positions opposite to the example of Fig. 2 in the left-and-right direction.
   Similarly, in the above-mentioned embodiment, the positions at which the sub-lamps 23 to 26 are arranged are not limited to the example of Fig. 2. As long as the sub-lamps 23 to 26 respectively irradiate the auxiliary illumination ranges A3 to A6 with light, the sub-lamps 23 to 26 may be arranged at any positions.
(j) While the sub-lamp unit 20 has one sub-lamp 21 that irradiates the auxiliary illumination range A1 with light and the one sub-lamp 22 that irradiates the auxiliary illumination range A2 with light in the above-mentioned embodiment, the invention is not limited to this. As long as a relationship that the auxiliary illumination range A1 includes a region located at a position further upward than the upper end of the left half portion of the main illumination range M1 in the top-and-bottom direction and further leftward than the left end of the main illumination range M2 in the left-and-right direction, and the auxiliary illumination range A2 includes a region located at a position further upward than the upper end of the right half portion of the main illumination range M1 in the top-and-bottom direction and further rightward than the right end of the main illumination range M2 in the left-and-right direction is satisfied, the sub-lamp unit 20 may have any number of sub-lamps 21, 22.
   For example, the sub-lamp unit 20 may have the plurality of sub-lamps 21 that irradiate the auxiliary illumination range A1 with light and the one sub-lamp 22 that irradiates the auxiliary illumination range A2 with light. Alternatively, the sub-lamp unit 20 may have the one sub-lamp 21 that irradiates the auxiliary illumination range A1 with light and the plurality of sub-lamps 22 that irradiate the auxiliary illumination range A2 with light. Alternatively, the sub-lamp unit 20 may have the plurality of sub-lamps 21 that irradiate the auxiliary illumination range A1 with light and the plurality of sub-lamps 22 that irradiate the auxiliary illumination range A2 with light.
   Similarly, while the sub-lamp unit 20 has one of each sub-lamp 23 to 26 in the above-mentioned embodiment, the invention is not limited to this. As long as the sub-lamps 23 to 26 respectively irradiate the auxiliary illumination ranges A3 to A6 with light, the sub-lamp unit 20 may have any number of sub-lamps 23 to 26.
(k) While the head lamp unit 10 is arranged at the cowl 70 in the above-mentioned embodiment, the invention is not limited to this. As long as the head lamp unit 10 is provided at the straddled vehicle, the head lamp unit 10 may be arranged at any portion of the straddled vehicle.
   Similarly, while the sub-lamp unit 20 is arranged at the cowl 70 in the above-mentioned embodiment, the invention is not limited to this. As long as the sub-lamp unit 20 is provided at the straddled vehicle and the illumination ranges change according to the bank angle of the vehicle, the sub-lamp unit 20 may be arranged at any portion of the straddled vehicle.
   For example, the head lamp unit 10 and the sub-lamp unit 20 may be arranged at the vehicle body frame 50. Alternatively, one of the head lamp unit 10 and the sub-lamp unit 20 may be arranged at the cowl 70, and the other one may be arranged at a portion different from the cowl 70.
(l) In the above-mentioned embodiment, the present invention is applied to the motorcycle. However, as long as a straddled vehicle travels while the vehicle body banks at least at the time of cornering of the vehicle, the invention is not limited to this. For example, the present invention may be applied to another straddled vehicle such as a tricycle or the like that travels while the vehicle body banks at the time of cornering of the vehicle.

### (7) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the motorcycle 100 is an example of a straddled vehicle, and the head lamp system 1 is an example of a head lamp system. The head lamp unit 10 is an example of a head lamp unit, the sub-lamp unit 20 is an example of a sub-lamp unit, the controller 40 is an example of a controller, and the screen SC is an example of a virtual plane. The sub-lamps 21 to 26 are respectively examples of first to sixth sub-lamps, the head lamps 11, 12 are respectively examples of first and second head lamps, the vehicle body frame 50 is an example of a vehicle body, and the detector 2 is an example of a detector.

The main illumination ranges M1, M2 are respectively examples of first and second main illumination ranges, the auxiliary illumination ranges A1 to A6 are respectively examples of first to sixth auxiliary illumination ranges, and the threshold values θ1 to θ10 are respectively examples of first to tenth values. The main cut-off line L1 is an example of a main cut-off line, and the cut-off lines C1 to C6 are respectively examples of first to sixth cut-off lines.

As each of constituent elements recited in the claims, various other elements having configurations or functions described in the claims can be also used.

### INDUSTRIAL APPLICABILITY

The present invention can be effectively utilized for a head lamp system and a straddled vehicle including the head lamp system.

## Claims

1. A head lamp system (1) to be provided in a straddled vehicle, comprising:
a head lamp unit (10) operable in a low beam mode and a high beam mode;
a sub-lamp unit (20) configured to supplement light distribution of the head lamp unit (10); and
a controller (40) configured to switch an operation of the head lamp unit (10) between the low beam mode and the high beam mode, and to control an operation of the sub-lamp unit (20), wherein
a virtual plane (SC) vertically standing up at a position in front of and spaced apart by a constant distance from the vehicle to face the vehicle is defined, and a first main illumination range (M1) and a second main illumination range (M2) are defined on the virtual plane (SC),
the second main illumination range (M2) includes a region located at a position further upward than an upper end of the first main illumination range (M1), has a width smaller than a width of the first main illumination range (M1) in a left-and-right direction, and located within the width of the first main illumination range (M1),
the head lamp unit (10) is configured to irradiate the first main illumination range (M1) with light and not to irradiate the second main illumination range (M2) except for the first main illumination range (M1) with light during the operation in the low beam mode, and to irradiate at least the second main illumination range (M2) with light during the operation in the high beam mode,
a first auxiliary illumination range (A1) and a second auxiliary illumination range (A2) are defined on the virtual plane (SC), the first auxiliary illumination range (A1) includes a region located at a position further upward than an upper end of a left half portion of the first main illumination range (M1) in a top-and-bottom direction and further leftward than a left end of the second main illumination range (M2) in the left-and-right direction, and the second auxiliary illumination range (A2) includes a region located at a position further upward than an upper end of a right half portion of the first main illumination range (M1) in the top-and-bottom direction and further rightward than a right end of the second main illumination range (M2) in the left-and-right direction,
the sub-lamp unit (20) includes
a first sub-lamp (21) configured to irradiate the first auxiliary illumination range (A1) with light, and
a second sub-lamp (22) configured to irradiate the second auxiliary illumination range (A2) with light, and
the controller (40) is configured to light up the first sub-lamp (21) when a leftward bank angle of the vehicle is equal to a predetermined first value or larger than the first value, during the operation of the head lamp unit (10) in the low beam mode, to light up the second sub-lamp (22) when a rightward bank angle of the vehicle is equal to a predetermined second value or larger than the second value, during the operation of the head lamp unit (10) in the low beam mode, and to keep the first and second sub-lamps (21, 22) lit up at all times during the operation of the head lamp unit (10) in the high beam mode,
**characterized in that**
a third auxiliary illumination range (A3) and a fourth auxiliary illumination range (A4) are further defined on the virtual plane (SC),
the third auxiliary illumination range (A3) includes a region located at a position further upward than an upper end of the first auxiliary illumination range (A1) in the top-and-bottom direction and further leftward than the left end of the second main illumination range (M2) in the left-and-right direction, and the fourth auxiliary illumination range (A4) includes a region located at a position further upward than an upper end of the second auxiliary illumination range (A2) in the top-and-bottom direction and further rightward than the right end of the second main illumination range (M2) in the left-and-right direction,
the sub-lamp unit (20) further includes
a third sub-lamp (23) configured to irradiate the third auxiliary illumination range (A3) with light, and
a fourth sub-lamp (24) configured to irradiate the fourth auxiliary illumination (A4) range with light, and
the controller (40) is configured to light up the third sub-lamp (23) when the leftward bank angle of the vehicle is equal to or larger than a third value that is larger than the first value, during the operation of the head lamp unit (10) in the low beam mode, to light up the fourth sub-lamp (24) when the rightward bank angle of the vehicle is equal to or larger than a fourth value that is larger than the second value, during the operation of the head lamp unit (10) in the low beam mode, to light up the third sub-lamp (23) when the leftward bank angle of the vehicle is equal to a fifth value or larger than the fifth value, during the operation of the head lamp unit (10) in the high beam mode, and to light up the fourth sub-lamp (24) when the rightward bank angle of the vehicle is equal to a sixth value or larger than the sixth value, during the operation of the head lamp unit (10) in the high beam mode.

2. The head lamp system (1) according to claim 1, wherein
the head lamp unit (10) includes a first head lamp (11) and a second head lamp (12),
the first head lamp (11) is configured to irradiate the first main illumination range (M1) with light during the operation in the low beam mode, and
the second head lamp (12) is configured to irradiate the second main illumination range (M2) with light during the operation in the high beam mode.

3. The head lamp system (1) according to claim 2, wherein
the first head lamp (11) is configured to irradiate the first main illumination range (M1) with light during the operation in the high beam mode.

4. The head lamp system (1) according to any one of claims 1 to 3, wherein
the first main illumination range (M1) has a main cut-off line (L1) that extends in the left-and-right direction,
the first auxiliary illumination range (A1) has a first cut-off line (C1) that obliquely extends leftward and upward with respect to the main cut-off line (L1), and
the second auxiliary illumination range (A2) has a second cut-off line (C2) that obliquely extends rightward and upward with respect to the main cut-off line (L1).

5. The head lamp system (1) according to claim 4, wherein
the third auxiliary illumination (A3) range has a third cut-off line (C3) that obliquely extends leftward and upward with respect to the first cut-off line (C1), and
the fourth auxiliary illumination range (A4) has a fourth cut-off line (C4) that obliquely extends rightward and upward with respect to the second cut-off line (C2).

6. The head lamp system (1) according to any one of claims 1 to 5, wherein the third value and the fifth value are equal to each other, and the fourth value and the sixth value are equal to each other.

7. The head lamp system (1) according to claims 1 to 3 or 6, wherein
a fifth auxiliary illumination range (A5) and a sixth auxiliary illumination range (A6) are further defined on the virtual plane (SC),
the fifth auxiliary illumination range (A5) includes a region located at a position further upward than an upper end of the third auxiliary illumination range (A3) in the top-and-bottom direction and further leftward than the left end of the second main illumination range (M2) in the left-and-right direction, the sixth auxiliary illumination range (A6) includes a region located at a position further upward than an upper end of the fourth auxiliary illumination range (A4) in the top-and-bottom direction and further rightward than the right end of the second main illumination range (M2) in the left-and-right direction,
the sub-lamp unit (20) further includes
a fifth sub-lamp (25) configured to irradiate the fifth auxiliary illumination range (A5) with light, and
a sixth sub-lamp (26) configured to irradiate the sixth auxiliary illumination range (A6) with light, and
the controller (40) is configured to light up the fifth sub-lamp when the leftward bank angle of the vehicle is equal to or larger than a seventh value that is larger than the third value, during the operation of the head lamp unit (10) in the low beam mode, to light up the sixth sub-lamp when the rightward bank angle of the vehicle is equal to or larger than an eighth value that is larger than the fourth value, during the operation of the head lamp unit (10) in the low beam mode, to light up the fifth sub-lamp when the leftward bank angle of the vehicle is equal to or larger than a ninth value that is larger than the fifth value, during the operation of the head lamp unit (10) in the high beam mode, and to light up the sixth sub-lamp when the rightward bank angle of the vehicle is equal to or larger than a tenth value that is larger than the sixth value, during the operation of the head lamp unit (10) in the high beam mode.

8. The head lamp system (1) according to claim 7, wherein
the seventh value and the ninth value are equal to each other, and the eighth value and the tenth value are equal to each other.

9. The head lamp system (1) according to claim 7 or 8, wherein
the first main illumination range (M1) has a main cut-off line (L1) that extends in the left-and-right direction;
the first auxiliary illumination range (A1) has a first cut-off line (C1) that obliquely extends leftward and upward with respect to the main cut-off line (L1),
the second auxiliary illumination range (A2) has a second cut-off line (C2) that obliquely extends rightward and upward with respect to the main cut-off line (L1),
the third auxiliary illumination range (A3) has a third cut-off line (C3) that obliquely extends leftward and upward with respect to the first cut-off line (C1),
the fourth auxiliary illumination range (A4) has a fourth cut-off line (C4) that obliquely extends rightward and upward with respect to the second cut-off line (C2),
the fifth auxiliary illumination range (A5) has a fifth cut-off line (C5) that obliquely extends leftward and upward with respect to the third cut-off line (C3), and
the sixth auxiliary illumination range (A6) has a sixth cut-off line (C6) that obliquely extends rightward and upward with respect to the fourth cut-off line (C4).

10. A straddled vehicle comprising:
a vehicle body;
a head lamp system (1) according to any one of claims 1 to 9; and
a detector (2) configured to detect a bank angle of the vehicle body, wherein
the controller (40) is configured to control an operation of the sub-lamp unit (20) based on the bank angle detected by the detector (2).

## Patentansprüche

1. Ein Scheinwerfersystem (1), das in einem Grätschsitzfahrzeug vorgesehen ist, das folgende Merkmale aufweist:
eine Scheinwerfereinheit (10), die in einem Abblendlichtmodus und einem Fernlichtmodus betrieben werden kann;
eine Neben-Scheinwerfereinheit (20), die ausgebildet ist, um eine Lichtverteilung der Scheinwerfereinheit (10) zu ergänzen; und
eine Steuerung (40), die ausgebildet ist, um einen Betrieb der Scheinwerfereinheit (10) zwischen dem Abblendlichtmodus und dem Fernlichtmodus zu schalten, und einen Betrieb der Neben-Scheinwerfereinheit (20) zu steuern, wobei
eine virtuelle Ebene (SC), die sich an einer Position vor und um einen konstanten Abstand von dem Fahrzeug beabstandet vertikal aufrichtet, um dem Fahrzeug zugewandt zu sein, definiert ist, und ein erster Hauptbeleuchtungsbereich (M1) und ein zweiter Hauptbeleuchtungsbereich (M2) auf der virtuellen Ebene (SC) definiert sind,
der zweite Hauptbeleuchtungsbereich (M2) eine Region umfasst, die an einer Position weiter oben als ein oberes Ende des ersten Hauptbeleuchtungsbereichs (M1) angeordnet ist, eine Breite aufweist, die geringer ist als eine Breite des ersten Hauptbeleuchtungsbereichs (M1) in einer Richtung nach links und rechts und innerhalb der Breite des ersten Hauptbeleuchtungsbereichs (M1) angeordnet ist,
die Scheinwerfereinheit (10) ausgebildet ist, um während des Betriebs in dem Abblendlichtmodus den ersten Hauptbeleuchtungsbereich (M1) mit Licht zu bestrahlen und den zweiten Hauptbeleuchtungsbereich (M2) außer dem ersten Hauptbeleuchtungsbereich (M1) nicht mit Licht zu bestrahlen, und um während des Betriebs in dem Fernlichtmodus zumindest den zweiten Hauptbeleuchtungsbereich (M2) mit Licht zu bestrahlen,
ein erster Hilfsbeleuchtungsbereich (A1) und ein zweiter Hilfsbeleuchtungsbereich (A2) auf der virtuellen Ebene (SC) definiert sind, der erste Hilfsbeleuchtungsbereich (A1) eine Region umfasst, die an einer Position weiter oben als ein oberes Ende eines linken halben Abschnitts des ersten Hauptbeleuchtungsbereichs (M1) in einer Richtung nach oben und unten und weiter links als ein linkes Ende des zweiten Hauptbeleuchtungsbereichs (M2) in der Richtung nach links und rechts angeordnet ist, und der zweite Hilfsbeleuchtungsbereich (A2) eine Region umfasst, die an einer Position weiter oben als ein oberes Ende eines rechten halben Abschnitts des ersten Hauptbeleuchtungsbereichs (M1) in der Richtung nach oben und unten und weiter rechts als ein rechtes Ende des zweiten Hauptbeleuchtungsbereichs (M2) in der Richtung nach links und rechts angeordnet ist,
die Neben-Scheinwerfereinheit (20) folgende Merkmale umfasst:
einen ersten Neben-Scheinwerfer (21), der ausgebildet ist, um den ersten Hilfsbeleuchtungsbereich (A1) mit Licht zu bestrahlen, und
einen zweiten Neben-Scheinwerfer (22), der ausgebildet ist, um den zweiten Hilfsbeleuchtungsbereich (A2) mit Licht zu bestrahlen, und
die Steuerung (40) ausgebildet ist, um während des Betriebs der Scheinwerfereinheit (10) in dem Abblendlichtmodus den ersten Neben-Scheinwerfer (21) zu erleuchten, wenn eine Querneigung des Fahrzeugs nach links gleich einem vorbestimmten ersten Wert oder größer als der erste Wert ist, um während des Betriebs der Scheinwerfereinheit (10) in dem Abblendlichtmodus den zweiten Neben-Scheinwerfer (22) zu erleuchten, wenn eine Querneigung des Fahrzeugs nach rechts gleich einem vorbestimmten zweiten Wert oder größer als der zweite Wert ist, und um während des Betriebs der Scheinwerfereinheit (10) in dem Fernlichtmodus den ersten und zweiten Neben-Scheinwerfer (21, 22) die ganze Zeit erleuchtet zu halten,
**dadurch gekennzeichnet, dass**
ein dritter Hilfsbeleuchtungsbereich (A3) und ein vierter Hilfsbeleuchtungsbereich (A4) ferner auf der virtuellen Ebene (SC) definiert sind,
der dritte Hilfsbeleuchtungsbereich (A3) eine Region umfasst, die an einer Position weiter oben als ein oberes Ende des ersten Hilfsbeleuchtungsbereichs (A1) in der Richtung nach oben und unten und weiter links als das linke Ende des zweiten Hauptbeleuchtungsbereichs (M2) in der Richtung nach links und rechts angeordnet ist, und der vierte Hilfsbeleuchtungsbereich (A4) eine Region umfasst, die an einer Position weiter oben als ein oberes Ende des zweiten Hilfsbeleuchtungsbereichs (A2) in der Richtung nach oben und unten und weiter rechts als das rechte Ende des zweiten Hauptbeleuchtungsbereichs (M2) in der Richtung nach links und rechts angeordnet ist,
die Neben-Scheinwerfereinheit (20) ferner folgende Merkmale umfasst:
einen dritten Neben-Scheinwerfer (23), der ausgebildet ist, um den dritten Hilfsbeleuchtungsbereich (A3) mit Licht zu bestrahlen, und
einen vierten Neben-Scheinwerfer (24), der ausgebildet ist, um den vierten Hilfsbeleuchtungsbereich (A4) mit Licht zu bestrahlen, und
die Steuerung (40) ausgebildet ist, um während des Betriebs der Scheinwerfereinheit (10) in dem Abblendlichtmodus den dritten Neben-Scheinwerfer (23) zu erleuchten, wenn die Querneigung des Fahrzeugs nach links gleich wie oder größer als ein dritter Wert ist, der größer als der erste Wert ist, um während des Betriebs der Scheinwerfereinheit (10) in dem Abblendlichtmodus den vierten Neben-Scheinwerfer (24) zu erleuchten, wenn die Querneigung des Fahrzeugs nach rechts gleich wie oder größer als ein vierter Wert ist, der größer als der zweite Wert ist, um während des Betriebs der Scheinwerfereinheit (10) in dem Fernlichtmodus den dritten Neben-Scheinwerfer (23) zu erleuchten, wenn die Querneigung des Fahrzeugs nach links gleich einem fünften Wert oder größer als der fünfte Wert ist, und um während des Betriebs der Scheinwerfereinheit (10) in dem Fernlichtmodus den vierten Neben-Scheinwerfer (24) zu erleuchten, wenn die Querneigung des Fahrzeugs nach rechts gleich einem sechsten Wert oder größer als der sechste Wert ist.

2. Das Scheinwerfersystem (1) gemäß Anspruch 1, bei dem
die Scheinwerfereinheit (10) einen ersten Scheinwerfer (11) und einen zweiten Scheinwerfer (12) umfasst,
der erste Scheinwerfer (11) ausgebildet ist, um während des Betriebs in dem Abblendlichtmodus den ersten Hauptbeleuchtungsbereich (M1) mit Licht zu bestrahlen, und
der zweite Scheinwerfer (12) ausgebildet ist, um während des Betriebs in dem Fernlichtmodus den zweiten Hauptbeleuchtungsbereich (M2) mit Licht zu bestrahlen.

3. Das Scheinwerfersystem (1) gemäß Anspruch 2, bei dem
der erste Scheinwerfer (11) ausgebildet ist, um während des Betriebs in dem Fernlichtmodus den ersten Hauptbeleuchtungsbereich (M1) mit Licht zu bestrahlen.

4. Das Scheinwerfersystem (1) gemäß einem der Ansprüche 1 bis 3, bei dem
der erste Hauptbeleuchtungsbereich (M1) eine Haupt-Hell-Dunkel-Grenze (L1) aufweist, die sich in der Richtung nach links und rechts erstreckt,
der erste Hilfsbeleuchtungsbereich (A1) eine erste Hell-Dunkel-Grenze (C1) aufweist, die sich bezüglich der Haupt-Hell-Dunkel-Grenze (L1) schräg nach links und oben erstreckt, und
der zweite Hilfsbeleuchtungsbereich (A2) eine zweite Hell-Dunkel-Grenze (C2) aufweist, die sich bezüglich der Haupt-Hell-Dunkel-Grenze (L1) schräg nach rechts und oben erstreckt.

5. Das Scheinwerfersystem (1) gemäß Anspruch 4, bei dem
der dritte Hilfsbeleuchtungsbereich (A3) eine dritte Hell-Dunkel-Grenze (C3) aufweist, die sich bezüglich der ersten Hell-Dunkel-Grenze (C1) schräg nach links und oben erstreckt, und
der vierte Hilfsbeleuchtungsbereich (A4) eine vierte Hell-Dunkel-Grenze (C4) aufweist, die sich bezüglich der zweiten Hell-Dunkel-Grenze (C2) schräg nach rechts und oben erstreckt.

6. Das Scheinwerfersystem (1) gemäß einem der Ansprüche 1 bis 5, bei dem
der dritte Wert und der fünfte Wert gleich zueinander sind und der vierte Wert und der sechste Wert gleich zueinander sind.

7. Das Scheinwerfersystem (1) gemäß Anspruch 1 bis 3 oder 6, bei dem ein fünfter Hilfsbeleuchtungsbereich (A5) und ein sechster Hilfsbeleuchtungsbereich (A6) ferner auf der virtuellen Ebene (SC) definiert sind,
der fünfte Hilfsbeleuchtungsbereich (A5) eine Region umfasst, die an einer Position weiter oben als ein oberes Ende des dritten Hilfsbeleuchtungsbereichs (A3) in der Richtung nach oben und unten und weiter links als das linke Ende des zweiten Hauptbeleuchtungsbereichs (M2) in der Richtung nach links und rechts angeordnet ist, wobei der sechste Hilfsbeleuchtungsbereich (A6) eine Region umfasst, die an einer Position weiter oben als ein oberes Ende des vierten Hilfsbeleuchtungsbereichs (A4) in der Richtung nach oben und unten und weiter rechts als das rechte Ende des zweiten Hauptbeleuchtungsbereichs (M2) in der Richtung nach links und rechts angeordnet ist,
die Neben-Scheinwerfereinheit (20) ferner folgende Merkmale umfasst:
einen fünften Neben-Scheinwerfer (25), der ausgebildet ist, um den fünften Hilfsbeleuchtungsbereich (A5) mit Licht zu bestrahlen, und
einen sechsten Neben-Scheinwerfer (26), der ausgebildet ist, um den sechsten Hilfsbeleuchtungsbereich (A6) mit Licht zu bestrahlen, und
die Steuerung (40) ausgebildet ist, um während des Betriebs der Scheinwerfereinheit (10) in dem Abblendlichtmodus den fünften Neben-Scheinwerfer zu erleuchten, wenn die Querneigung des Fahrzeugs nach links gleich wie oder größer als ein siebter Wert ist, der größer als der dritte Wert ist, um während des Betriebs der Scheinwerfereinheit (10) in dem Abblendlichtmodus den sechsten Neben-Scheinwerfer zu erleuchten, wenn die Querneigung des Fahrzeugs nach rechts gleich wie oder größer als ein achter Wert ist, der größer als der vierte Wert ist, um während des Betriebs der Scheinwerfereinheit (10) in dem Fernlichtmodus den fünften Neben-Scheinwerfer zu erleuchten, wenn die Querneigung des Fahrzeugs nach links gleich wie oder größer als ein neunter Wert ist, der größer als der fünfte Wert ist, und um während des Betriebs der Scheinwerfereinheit (10) in dem Fernlichtmodus den sechsten Neben-Scheinwerfer zu erleuchten, wenn die Querneigung des Fahrzeugs nach rechts gleich wie oder größer als ein zehnter Wert ist, der größer als der sechste Wert ist.

8. Das Scheinwerfersystem (1) gemäß Anspruch 7, bei dem der siebte Wert und der neunte Wert einander gleich sind und der achte Wert und der zehnte Wert einander gleich sind.

9. Das Scheinwerfersystem (1) gemäß Anspruch 7 oder 8, bei dem
der erste Hauptbeleuchtungsbereich (M1) eine Haupt-Hell-Dunkel-Grenze (L1) aufweist, die sich in der Richtung nach links und rechts erstreckt;
der erste Hilfsbeleuchtungsbereich (A1) eine erste Hell-Dunkel-Grenze (C1) aufweist, die sich bezüglich der Haupt-Hell-Dunkel-Grenze (L1) schräg nach links und oben erstreckt,
der zweite Hilfsbeleuchtungsbereich (A2) eine zweite Hell-Dunkel-Grenze (C2) aufweist, die sich bezüglich der Haupt-Hell-Dunkel-Grenze (L1) schräg nach rechts und oben erstreckt,
der dritte Hilfsbeleuchtungsbereich (A3) eine dritte Hell-Dunkel-Grenze (C3) aufweist, die sich bezüglich der ersten Hell-Dunkel-Grenze (C1) schräg nach links und oben erstreckt,
der vierte Hilfsbeleuchtungsbereich (A4) eine vierte Hell-Dunkel-Grenze (C4) aufweist, die sich bezüglich der zweiten Hell-Dunkel-Grenze (C2) schräg nach rechts und oben erstreckt,
der fünfte Hilfsbeleuchtungsbereich (A5) eine fünfte Hell-Dunkel-Grenze (C5) aufweist, die sich bezüglich der dritten Hell-Dunkel-Grenze (C3) schräg nach links und oben erstreckt, und
der sechste Hilfsbeleuchtungsbereich (A6) eine sechste Hell-Dunkel-Grenze (C6) aufweist, die sich bezüglich der vierten Hell-Dunkel-Grenze (C4) schräg nach rechts und oben erstreckt.

10. Ein Grätschsitzfahrzeug, das folgende Merkmale aufweist:
einen Fahrzeugkörper;
ein Scheinwerfersystem (1) gemäß einem der Ansprüche 1 bis 9; und
einen Detektor (2), der ausgebildet ist, um eine Querneigung des Fahrzeugkörpers zu erfassen, wobei
die Steuerung (40) ausgebildet ist, um einen Betrieb der Neben-Scheinwerfereinheit (20) basierend auf der durch den Detektor (2) erfassten Querneigung zu steuern.

## Revendications

1. Système de phare (1) destiné à être prévu sur un véhicule à selle, comprenant:
une unité de phare (10) pouvant fonctionner en mode de faible faisceau et en mode de long faisceau;
une unité de sous-lampe (20) configurée pour compléter la distribution de lumière de l'unité de phare (10); et
un contrôleur (40) configuré pour commuter un fonctionnement de l'unité de phare (10) entre le mode de faible faisceau et le mode de long faisceau, et pour commander un fonctionnement de l'unité de sous-lampe (20), dans lequel
un plan virtuel (SC) s'élevant verticalement en une position devant et espacée d'une distance constante du véhicule pour faire face au véhicule est défini, et une première plage d'illumination principale (M1) et une deuxième plage d'illumination principale (M2) sont définies sur le plan virtuel (SC),
la deuxième plage d'illumination principale (M2) comporte une région située en une position plus vers le haut qu'une extrémité supérieure de la première plage d'illumination principale (M1), présente une largeur plus petite que la largeur de la première plage d'illumination principale (M1) dans une direction vers la gauche et vers la droite, et est située dans les limites de la largeur de la première plage d'illumination principale (M1),
l'unité de phare (10) est configurée pour irradier la première plage d'illumination principale (M1) par de la lumière et pour ne pas irradier la deuxième plage d'illumination principale (M2), sauf pour la première plage d'illumination principale (M1), par de la lumière pendant le fonctionnement en mode de faible faisceau, et pour irradier au moins la deuxième plage d'illumination principale (M2) par de la lumière pendant le fonctionnement en mode de long faisceau,
une première plage d'illumination auxiliaire (A1) et une deuxième plage d'illumination auxiliaire (A2) sont définies sur le plan virtuel (SC), la première plage d'illumination auxiliaire (A1) comporte une région située en une position plus vers le haut qu'une extrémité supérieure d'une portion de moitié gauche de la première plage d'illumination principale (M1) dans une direction vers le haut et vers le bas et plus à gauche qu'une extrémité gauche de la deuxième plage d'illumination principale (M2) dans la direction vers la gauche et vers la droite, et la deuxième plage d'illumination auxiliaire (A2) comporte une région située en une position plus vers le haut qu'une extrémité supérieure d'une portion de moitié droite de la première plage d'illumination principale (M1) dans la direction vers le haut et vers le bas et plus à droite qu'une extrémité droite de la deuxième plage d'illumination principale (M2) dans la direction vers la gauche et vers la droite,
l'unité de sous-lampe (20) comporte
une première sous-lampe (21) configurée pour irradier la première plage d'illumination auxiliaire (A1) par de la lumière, et
une deuxième sous-lampe (22) configurée pour irradier la deuxième plage d'illumination auxiliaire (A2) par de la lumière, et
le contrôleur (40) est configuré pour allumer la première sous-lampe (21) lorsqu'un angle d'inclinaison vers la gauche du véhicule est égal à une première valeur prédéterminée ou supérieur à la première valeur pendant le fonctionnement de l'unité de phare (10) en mode de faible faisceau, pour allumer la deuxième sous-lampe (22) lorsqu'un angle d'inclinaison vers la droite du véhicule est égal à une deuxième valeur prédéterminée ou supérieur à la deuxième valeur pendant le fonctionnement de l'unité de phare (10) en mode de faible faisceau, et pour maintenir les première et deuxième sous-lampes (21, 22) allumées à tout moment pendant le fonctionnement de l'unité de phare (10) en mode de long faisceau,
**caractérisé par le fait que**
une troisième plage d'illumination auxiliaire (A3) et une quatrième plage d'illumination auxiliaire (A4) sont par ailleurs définies sur le plan virtuel (SC),
la troisième plage d'illumination auxiliaire (A3) comporte une région située en une position plus vers le haut qu'une extrémité supérieure de la première plage d'illumination auxiliaire (A1) dans la direction vers le haut et vers le bas et plus à gauche de l'extrémité gauche de la deuxième plage d'illumination principale (M2) dans la direction vers la gauche et vers la droite, et la quatrième plage d'illumination auxiliaire (A4) comporte une région située en une position plus vers le haut haut qu'une extrémité supérieure de la deuxième plage d'illumination auxiliaire (A2) dans la direction vers le haut et vers le bas et plus à droite que l'extrémité droite de la deuxième région d'illumination principale (M2) dans la direction vers la gauche et vers la droite,
l'unité de sous-lampe (20) comporte par ailleurs
une troisième sous-lampe (23) configurée pour irradier la troisième plage d'illumination auxiliaire (A3) par de la lumière, et
une quatrième sous-lampe (24) configurée pour irradier la quatrième plage d'illumination auxiliaire (A4) par de la lumière, et
le contrôleur (40) est configuré pour allumer la troisième sous-lampe (23) lorsque l'angle d'inclinaison vers la gauche du véhicule est égal ou supérieur à une troisième valeur qui est supérieure à la première valeur pendant le fonctionnement de l'unité de phare (10) en mode de faible faisceau, pour allumer la quatrième sous-lampe (24) lorsque l'angle d'inclinaison vers la droite du véhicule est égal ou supérieur à une quatrième valeur qui est supérieure à la deuxième valeur pendant le fonctionnement de l'unité de phare (10) en mode de faible faisceau, pour illuminer la troisième sous-lampe (23) lorsque l'angle d'inclinaison vers la gauche du véhicule est égal à une cinquième valeur ou supérieur à la cinquième valeur pendant le fonctionnement de l'unité de phare (10) en mode de long faisceau, et pour allumer la quatrième sous-lampe (24) lorsque l'angle d'inclinaison vers la droite du véhicule est égal à une sixième valeur ou supérieur à la sixième valeur pendant le fonctionnement de l'unité de phare (10) en mode de long faisceau.

2. Système de phare (1) selon la revendication 1, dans lequel l'unité de phare (10) comporte un premier phare (11) et un deuxième phare (12),
le premier phare (11) est configuré pour irradier la première plage d'illumination principale (M1) par de la lumière pendant le fonctionnement en mode de faible faisceau, et
le deuxième phare (12) est configuré pour irradier la deuxième plage d'illumination principale (M2) par de la lumière pendant le fonctionnement en mode de long faisceau.

3. Système de phare (1) selon la revendication 2, dans lequel
le premier phare (11) est configuré pour irradier la première plage d'illumination principale (M1) par de la lumière pendant le fonctionnement en mode de long faisceau.

4. Système de phare (1) selon l'une quelconque des revendications 1 à 3, dans lequel
la première plage d'illumination principale (M1) présente une ligne de coupure principale (L1) qui s'étend dans la direction vers la gauche et vers la droite,
la première plage d'illumination auxiliaire (A1) présente une première ligne de coupure (C1) qui s'étend obliquement vers la gauche et vers le haut par rapport à la ligne de coupure principale (L1), et
la deuxième plage d'illumination auxiliaire (A2) présente une deuxième ligne de coupure (C2) qui s'étend obliquement vers la droite et vers le haut par rapport à la ligne de coupure principale (L1).

5. Système de phare (1) selon la revendication 4, dans lequel
la troisième plage d'illumination auxiliaire (A3) présente une troisième ligne de coupure (C3) qui s'étend obliquement vers la gauche et vers le haut par rapport à la première ligne de coupure (C1), et
la quatrième plage d'illumination auxiliaire (A4) présente une quatrième ligne de coupure (C4) qui s'étend obliquement vers la droite et vers le haut par rapport à la deuxième ligne de coupure (C2).

6. Système de phare (1) selon l'une quelconque des revendications 1 à 5, dans lequel
la troisième valeur et la cinquième valeur sont égales l'une à l'autre, et la quatrième valeur et la sixième valeur sont égales l'une à l'autre.

7. Système de phare (1) selon les revendications 1 à 3 ou 6, dans lequel
une cinquième plage d'illumination auxiliaire (A5) et une sixième plage d'illumination auxiliaire (A6) sont par ailleurs définies sur le plan virtuel (SC),
la cinquième plage d'illumination auxiliaire (A5) comporte une région située en une position plus vers le haut qu'une extrémité supérieure de la troisième plage d'illumination auxiliaire (A3) dans la direction vers le haut et vers le bas et plus à gauche que l'extrémité gauche de la deuxième illumination principale (M2) dans la direction vers la gauche et vers la droite, la sixième plage d'illumination auxiliaire (A6) comporte une région située en une position plus vers le haut qu'une extrémité supérieure de la quatrième plage d'illumination auxiliaire (A4) dans la direction vers le haut et vers le bas et plus à droite que l'extrémité droite de la deuxième illumination principale (M2) dans la direction vers la gauche et vers la droite,
l'unité de sous-lampe (20) comporte par ailleurs
une cinquième sous-lampe (25) configurée pour irradier la cinquième plage d'illumination auxiliaire (A5) par de la lumière, et
une sixième sous-lampe (26) configurée pour irradier la sixième plage d'illumination auxiliaire (A6) par de la lumière, et
le contrôleur (40) est configuré pour allumer la cinquième sous-lampe lorsque l'angle d'inclinaison vers la gauche du véhicule est égal ou supérieur à une septième valeur qui est supérieure à la troisième valeur pendant le fonctionnement de l'unité de phare (10) en mode de faible faisceau, pour allumer la sixième sous-lampe lorsque l'angle d'inclinaison vers la droite du véhicule est égal ou supérieur à une huitième valeur qui est supérieure à la quatrième valeur pendant le fonctionnement de l'unité de phare (10) en mode de faible faisceau, pour allumer la cinquième sous-lampe lorsque l'angle d'inclinaison vers la gauche du véhicule est égal ou supérieur à une neuvième valeur qui est supérieure à la cinquième valeur pendant le fonctionnement de l'unité de phare (10) en mode de long faisceau, et pour allumer la sixième sous-lampe lorsque l'angle d'inclinaison vers la droite du véhicule est égal ou supérieur à une dixième valeur qui est supérieure à la sixième valeur pendant le fonctionnement de l'unité de phare (10) en mode de long faisceau.

8. Système de phare (1) selon la revendication 7, dans lequel
la septième valeur et la neuvième valeur sont égales l'une à l'autre et la huitième valeur et la dixième valeur sont égales l'une à l'autre.

9. Système de phare (1) selon la revendication 7 ou 8, dans lequel
la première plage d'illumination principale (M1) présente une ligne de coupure principale (L1) qui s'étend dans la direction vers la gauche et vers la droite;
la première plage d'illumination auxiliaire (A1) présente une première ligne de coupure (C1) qui s'étend obliquement vers la gauche et vers le haut par rapport à la ligne de coupure principale (L1),
la deuxième plage d'illumination auxiliaire (A2) présente une deuxième ligne de coupure (C2) qui s'étend obliquement vers la droite et vers le haut par rapport à la ligne de coupure principale (L1),
la troisième plage d'illumination auxiliaire (A3) présente une troisième ligne de coupure (C3) qui s'étend obliquement vers la gauche et vers le haut par rapport à la première ligne de coupure (C1),
la quatrième plage d'illumination auxiliaire (A4) présente une quatrième ligne de coupure (C4) qui s'étend obliquement vers la droite et vers le haut par rapport à la deuxième ligne de coupure (C2),
la cinquième plage d'illumination auxiliaire (A5) présente une cinquième ligne de coupure (C5) qui s'étend obliquement vers la gauche et vers le haut par rapport à la troisième ligne de coupure (C3), et
la sixième plage d'illumination auxiliaire (A6) présente une sixième ligne de coupure (C6) qui s'étend obliquement vers la droite et vers le haut par rapport à la quatrième ligne de coupure (C4).

10. Véhicule à selle comprenant:
une carrosserie de véhicule;
un système de phare (1) selon l'une quelconque des revendications 1 à 9; et
un détecteur (2) configuré pour détecter un angle d'inclinaison de la carrosserie de véhicule, dans lequel
le contrôleur (40) est configuré pour commander un fonctionnement de l'unité de sous-lampe (20) sur base de l'angle d'inclinaison détecté par le détecteur (2).
